Europäisches Patentamt

European Patent Office

Office européen des brevets

(11) Veröffentlichungsnummer: **0 336 225**
**A2**

# (12) EUROPÄISCHE PATENTANMELDUNG

(21) Anmeldenummer: 89105203.7

(22) Anmeldetag: 23.03.89

(51) Int. Cl.⁴: **B29C 67/22**

(30) Priorität: 07.04.88 DE 3811631
29.10.88 DE 3836875

(43) Veröffentlichungstag der Anmeldung:
11.10.89 Patentblatt 89/41

(84) Benannte Vertragsstaaten:
AT BE CH DE ES FR GB GR IT LI LU NL SE

(71) Anmelder: ERLENBACH GMBH & CO. KG

D-5428 Lautert(DE)

(72) Erfinder: Erlenbach, Hans
Hermann-Löns-Strasse 13
D-5428 Nastätten(DE)

(74) Vertreter: Dr. Fuchs, Dr. Luderschmidt
Dipl.-Phys. Seids, Dr. Mehler Patentanwälte
Sonnenberger Strasse 100
D-6200 Wiesbaden(DE)

(54) Verfahren und Vorrichtung zum Herstellen von Formlingen aus expandierbaren Kunststoffpartikeln.

(57) Zur Herstellung von Formlingen aus expandierbaren Kunststoffpartikeln, insbesondere vorgeschäumten Polystyrolpartikeln, wird ein neuartiges Verfahren geschaffen, bei welchem das Kühlen der eigentlichen Formwandteile ausschließlich durch Verdampfen von aus Wasserdampf gewonnenem Kondensat vorgenommen wird, vorzugsweise Kondensat, das aus zum Beiheizen der Formwandteile und zum Verschweißen der Kunststoffpartikel eingeleiteten Wasserdampf in den Dampfkammern anfällt. Dieses Verdampfen von Kondensat erfolgt dabei an der der jeweiligen Dampfkammer zugewandten Oberfläche der Formwandteile unter der Einwirkung von in der Dampfkammer erzeugtem Vakuum. Das Kondensat wird heiß zugeführt, nämlich bei Siedetemperatur oder nahe dabei. Die Vorrichtung zur Durchführung dieses Verfahrens weist neben den für die Gewinnung, Temperatureinstellung und das Aufbringen des Kondensats erforderlichen Maßnahmen ferner die neuartige Maßnahme auf, daß die der jeweiligen Dampfkammer zugewandte Oberfläche der Formwandteile mit wesentlich erhöhter Oberflächengröße ausgebildet wird, vorzugsweise durch Anformen von bevorzugt kugelförmigen Flächenvergrößerungselementen, die zwischen sich Auffang- und Speicherräume für Kondensat und verengte Zugänge zwischen diesen Speicherräumen und der Dampfkammer bilden.

Fig.1

## Verfahren und Vorrichtung zum Herstellen von Formlingen aus expandierbaren Kunststoffpartikeln

Die Erfindung betrifft ein Verfahren und eine Vorrichtung zum Herstellen von Formlingen aus expandierbaren Kunststoffpartikeln, insbesondere vorgeschäumten Polystyrolpartikeln, bei welchen die Kunststoffpartikel im Formhohlraum eines zwei- oder mehrteiligen Formwerkzeugs unter der Einwirkung von Wärme aufgebläht und gegen die eigentlichen Formwandteile geformt werden, die dazu mittels in an ihrer Außenseite angeordneten Dampfkammern eingeführten heißen Wasserdampfes beheizt werden, wobei die geblähten Kunststoffpartikel durch in den Formhohlraum eingeführten Wasserdampf miteinander verschweißt werden und die so gebildeten Formlinge im Formwerkzeug durch mittels Flüssigkeitsaufgabe und Evakuieren der Dampfkammern erfolgendes Kühlen der eigentlichen Formwandteile stabilisiert und anschließend entformt werden.

Bei den bekannten Verfahren und Vorrichtungen dieser Art wird das Kühlen der Formwand durch Einsprühen von Wasser, sei es kaltem Wasser oder vorgewärmtem Wasser - wie aus DE-OS 31 15 773 bekannt - vorgenommen. Das Einspritzen von Wasser als Kühlmittel oder zusätzliches, den Kühlvorgang unterstützendes Medium hat jedoch den Mangel, daß die in dem Formling enthaltenen Reste des zum Verschweißen benutzten Wasserdampfes im Formling selbst kondensiert werden. Der Formling kann deshalb nur in nassem oder feuchtem Zustand bzw. mit nasser oder feuchter Oberfläche entformt werden. Darüberhinaus hat die Benutzung von als Kühlmittel in die Dampfkammer einzuspritzendem oder einzusprühendem Wasser den erheblichen Nachteil, daß in dem Wasser enthaltene Stoffe, insbesondere Kalziumverbindungen, mit in den expandierbaren Kunststoffpartikeln enthaltenen Stoffen insbesondere als Beschichtung auf den Partikeln vorgesehenen Gleitmitteln, starke, nur sehr schwer (praktisch überhaupt nicht mehr) entfernbare Beläge auf der der Dampfkammer zugewandten Rückenfläche der Formwandteile bilden. Solche Beläge vermindern beträchtlich die Wärmeübergangseigenschaften von der Dampfkammer auf die Formwandteile und dadurch den thermisch-energetischen Wirkungsgrad des Werkzeugs.

Demgegenüber ist es Aufgabe der Erfindung, ein verbessertes Verfahren und eine verbesserte Vorrichtung zum Herstellen von Formlingen aus expandierbaren Kunststoffartikeln zu schaffen, die einerseits einen wesentlich verbesserten energetischen Wirkungsgrad und damit eine wesentliche Verminderung des Energieaufwandes im Betrieb ermöglichen, zum anderen eine wirksame Vermeidung der störenden Beläge an der Rückenfläche der Formwandteile ermöglichen und nicht zuletzt die Herstellung trockener Formlinge aus expandiertem Kunststoff ohne die Notwendigkeit zusätzlichen Aufwandes an Vorrichtungsteilen, Zeit und Energie ermöglichen.

Diese Aufgabe wird im Verfahren gemäß der Erfindung dadurch gelöst, daß das Kühlen der eigentlichen Formwandteile durch Verdampfen von aus Wasserdampf gebildetem Kondensat unter Evakuieren der Dampfkammern vorgenommen wird und daß zu verdampfendes Kondensat hierzu zumindest bei Beginn des Kühlens, auf die der jeweiligen Dampfkammer zugewandte Rückenfläche der eigentlichen Formwandteile innerhalb der Dampfkammer mit einer Temperatur aufgebracht wird, die gleich oder nur wenige Kelvin, maximal 10 K, unterhalb der Siedetemperatur des Kondensats ist, und zwar derjenigen und zwar derjenigen Siedetemperatur, wie sie dem im Zeitpunkt des Aufbringens des Kondensats auf die Formwand-Rückenfläche in der Dampfkammer herrschenden Druck entspricht.

Dabei kann das im Verfahren anfallende Wasserdampf-Kondensat aufgefangen und als zumindest ein Teil der zum Kühlen der Formwandteile zu benutzenden Kondensatmenge eingesetzt werden.

Die Erfindung geht dabei von der neuartigen Erkenntnis und Feststellung aus, daß das Verdampfen von auf Siedetemperatur oder nahezu auf Siedetemperatur befindlichem Kondensat nach Ablassen des Dampfes aus der Dampfkammer und bei Anlegen von Vakuum an die Dampfkammer ausreicht, um die Formwand für das Stabilisieren des Formlings bis zur Entformbarkeit ausreichend zu kühlen. Bei sehr einfacher Gestaltung der Formlinge und damit sehr einfacher Ausbildung der Formwandteile kann u.U. die sich bei dem Ablassen des Wasserdampfes und damit in der Dampfkammer entstehenden Druckentlastung an der Rückenfläche der Formwandteile niederschlagende Kondensatmenge ausreichen, um durch Verdampfen während des Evakuierens der Dampfkammer die Formwandteile ausreichend zu kühlen. Im allgemeinen wird jedoch eine zusätzliche Kondensatmenge der Rückenfläche der Formwandteile zuzuführen sein. In jedem Fall jedoch soll das Kühlen der Formwand zum Stabilisieren der Formlinge nur bis in den Bereich der Stabilisierungstemperatur geführt werden, also bis zu einer Temperatur, bei der kein Nachblähen des expandierbaren Kunststoffs nach dem Entformen mehr auftritt. Die Formwand bleibt auch beim Öffnen der Form zum Entformen noch relativ warm. Dadurch wird der Energieaufwand zum Aufheizen der Form im nächsten Arbeitszy-

kius wesentlich vermindert, und außerdem die erforderliche Zeit für den Arbeitszyklus erheblich verkürzt. Durch das Kühlen der Formwand durch Verdampfen von auf ihrer der Dampfkammer zugewandten Rückenfläche aufgefangenem und evtl. zusätzlich zugeführtem Kondensat unter Anlegen von Vakuum an die Dampfkammer ergibt sich ein sanftes Ansetzen des Kühlvorganges, so daß Reste von Wasserdampf in dem sich im Formhohlraum befindlichen porösen Formkörper noch aus diesem abdampfen können und nicht kondensieren, wie dies bei schnell einsetzendem, abschreckendem Kühlen der Formwandteile unvermeidlich ist. Da das Bedampfen des Formkörpers zum Verschweißen der Kunststoffpartikel im allgemeinen mittels in den Formwandteilen angebrachter Bedampfungsdüsen von der Dampfkammer her erfolgt, kann mit dem Evakuieren der Dampfkammer auch der im porösen Formkörper enthaltene Wasserdampf weitgehend abgezogen werden. Sollte sich im Inneren des Formkörpers bereits Kondensat gebildet haben, so wird dieses durch das in der Dampfkammer erzeugte und durch die Bedampfungsdüsen bis zum Formling hin wirksam werdende Vakuum sicher verdampft werden. Auf diese Weise wird die Möglichkeit geschaffen, daß sich ein kombiniertes Kühlen des Formlings von seinem Inneren her und von der Formwand her einstellt, wodurch trotz der geringen Wärmeleitfähigkeit der Formlingwand ein wirksames Kühlen und wirksames Trocknen des Formlings hervorgerufen werden. Das für das Kühlen durch Verdampfen erfindungsgemäß ausschließlich zu benutzende Kondensat ist bei Beginn des Kühlschrittes relativ heiß, d.h. mit Temperatur bei oder knapp, d.h. maximal 10 K unterhalb der Siedetemperatur, also beträchtlich oberhalb der Stabilisierungstemperatur des jeweiligen expandierten Kunststoffmaterials einzusetzen. Das Kühlen der Formwand erfolgt somit im Gegensatz zu den bisherigen bekannten Verfahren nicht mehr in Verbindung mit dem Aufbringen von kaltem Kühlmittel auf die Formwandoberfläche. Es wird dadurch jegliches Abschrecken und vor allem örtliches Abschrecken der der Formwand und der Formlingoberfläche vermieden. Das intensive Verschweißen der Kunststoffpartikel kann sich in den Oberflächenbereichen des in dem Formwerkzeug befindlichen Formlings zeitlich noch bis in den Kühlschritt hinein erstrecken. Auf diese Weise wird durch das erfindungsgemäße Verfahren ein verbessertes Verschweißen und damit eine verbesserte Ausbildung an der Formlingoberfläche erreicht. Durch das milde Ansetzen des Kühlvorganges in Verbindung mit der Ausnutzung des im Inneren des Formlings einsetzenden Kühlvorganges durch Abziehen von restlichem Dampf und Verdampfen von gebildetem Kondensat wird auch eine verbesserte Struktur-Gleichmäßigkeit in der Formlingwand von der

Oberfläche her bis zum Inneren erreicht. Die Temperatur des auf die Formwand-Rückenfläche aufgebrachten Kondensats soll bei Beginn des Kühlvorganges bevorzugt nur 1 K bis 2 K unterhalb der durch den Druck in der Dampfkammer bestimmten Siedetemperatur des Kondensats liegen. Dies gilt sowohl für das durch Niederschlagen an der Formlingrückenfläche aufgefangene und von dort wieder verdampfte Kondensat als auch insbesondere für dasjenige Kondensat, das zusätzlich zu dem sich bei Druckentspannung in der Dampfkammer an der Rückenfläche der Formlingteile niederschlagenden und dort aufgefangenen Kondensat, noch in seiner Temperatur auf oder wenige Kelvin unter Siedetemperatur eingestellte, auf die Rückenfläche der Formwandteile zu spritzenden oder zu sprühenden Kondensat.

In einer Ausführungsform der Erfindung ist zumindest ein Teil der für das Verdampfen zur Kühlung der Formwandteile eingesetzten Kondensatmenge durch Auffangen und Zurückhalten des sich während der dem Kühlen vorangehenden Verfahrensschritte desselben Verfahrenszyklus niederschlagenden Kondensats an der der Dampfkammer zugewandten Rückenfläche des jeweiligen Formwandteiles selbst zu gewinnen und direkt von dort zur Kühlung wieder zu verdampfen. Da diese aufgefangene Kondensatmenge in den meisten Anwendungsfällen nicht für den Kühlvorgang ausreicht, kann in Weiterbildung dieser Ausführungsform der Erfindung das an den Dampfkammern anfallende, von der Rückenfläche des jeweiligen Formwandteiles freie Kondensat aufgefangen und zumindest zum Teil als zum Verdampfen vorgesehene Kondensatmenge oder zum Ergänzen der zum Verdampfen vorgesehenen Kondensatmenge auf die der Dampfkammer zugewandten Rückenfläche des jeweiligen Formwandteiles gesprüht und/oder gespritzt werden. Falls die in vorhergehenden Verfahrenszyklen oder in demselben Verfahrenszyklus anfallenden Kondensatmengen nicht für das Kühlen ausreichen (was insbesondere bei Betriebsbeginn einer erfindungsgemäßen Vorrichtung bzw. Anlage vorkommen kann), ist ausreichend Kondensat aus Teilen des für den Betrieb erzeugten Wasserdampfes zu bilden. Keinesfalls soll Leitungswasser, auch nicht aufbereitetes Wasser, zur Ergänzung der für das Kühlen im Verlauf des Verfahrens anfallende Kondensatmenge ist größer als sie für die Kühlung benötigt wird, kann das Kondensat ohne weiteres in den Dampferzeuger zurückgeführt werden.

Das in den Dampfkammern anfallende, von der Rückenfläche des jeweiligen Formwandteiles freie Kondensat kann im Rahmen der Erfindung aus der jeweiligen Dampfkammer abgezogen, gesammelt und zum Einleiten des Kühlens der eigentlichen Formwandteile zunächst auf eine wenige Kelvin unterhalb derjenigen Siedetemperatur liegende Temperatur eingestellt werden, wie sie dem beim Aufbringen des Kondensats auf die Rückenfläche des Formwandteiles in der jeweiligen Dampfkammer herrschenden Druck entspricht, wobei das so in seiner Temperatur eingestellte Kondensat mittels gasförmigen Mediums, vorzugsweise Wasserdampf, innerhalb der Dampfkammer auf die Rückseite der zu kühlenden Formwandteile gesprüht und/oder gespritzt wird. Bei Betrieb einer Mehrzahl von Schäumformmaschinen empfiehlt es sich, das in allen Schäumformmaschinen anfallende, freie Kondensat zentral zu sammeln und aufzubereiten sowie dann entsprechend dem jeweiligen Kühlungsbedarf wieder an die einzelnen Schäumformmaschinen zu verteilen. Das gesammelte Kondensat kann dabei mittels aus Wasserdampf erzeugtem Frischkondensat ergänzt und/oder aufbereitet werden.

Um die für das Aufbringen auf die Rückenfläche der Formwandteile eingestellte Temperatur des Kondensats auch tatsächlich bis an die Einsatzstelle hin aufrecht zu erhalten, empfiehlt es sich, die Kühlmittel-Zuführungsleitungen zu den Steuerventilen ständig mit Kondensat gefüllt zu halten, das auf diese Weise außer den Kühlzeiten durch Umlauf durch einen Wärmetauscher ständig auf einer nur wenige Kelvin unterhalb der Siedetemperatur liegenden Temperatur und auf für das Versprühen oder Verspritzen geeigneten Druck zu halten ist.

Beispielsweise können bei Herstellung von Formlingen aus expandiertem Polystyrol die eigentlichen Formwandteile auf eine Temperatur zwischen etwa 70° und 80° C abgekühlt werden, wobei das Kondensat bei Beginn des Kühlvorganges mit Temperatur bei 98° C bis 100° C auf die der Dampfkammer zugewandte Rückenfläche der Formwandteile zu sprühen und/oder zu spritzen ist, während der Absolutdruck in der Dampfkammer im Bereich von 1 bar beträgt.

Zur sicheren gleichmäßigen Verteilung des Kondensats auf der Rückenfläche der Formwandteile empfiehlt es sich, das zum Kühlen auf die Rückenfläche der Formwandteile zu sprühende oder zu spritzende Kondensat mit einem Druck bei 3 bar bis 5 bar in die Dampfkammer zu sprühen oder zu spritzen und dabei in der Dampfkammer während des Kühlens - ausgehend von Atmosphärendruck - durch Evakuieren Druckminderung auf etwa 200 mbar bis 300 mbar Absolutdruck zu erzeugen.

Im Rahmen der Erfindung und zur Durchführung des erfindungsgemäßen Verfahrens wird eine Vorrichtung zum Herstellen von Formlingen aus expandierbaren Kunststoffpartikeln, insbesondere vorgeschäumten Polystyrolpartikeln, geschaffen, bei der ausgegangen wird von einer Vorrichtung mit einem zwei- oder mehrteiligen Formwerkzeug, dessen Formhohlraum durch eigentliche Formwandteile begrenzt ist, an deren Rückseite Dampfkammern zum Beheizen der Formwand mittels Wasserdampf und an denen Einrichtungen zum Zuführen von Dampf in den Formhohlraum vorgesehen sind, wobei in den Dampfkammern Einrichtungen zum gesteuerten Einsprühen oder Einspritzen von Kühlflüssigkeit angebracht sind.

Die erfindungsgemäße Vorrichtung kennzeichnet sich dabei dadurch, daß die eigentlichen Formwandteile an ihrer der jeweiligen Dampfkammer zugewandten Rückenfläche mit zum Halten und Abdampfen von Kondensat ausgebildeter Oberfläche ausgebildet sind und die Einrichtungen zum Einsprühen oder Einspritzen von Kühlflüssigkeit auf die Rückenfläche der Formwandteile gerichtete Sprühvorrichtungen oder Spritzvorrichtungen aufweisen, die über eine für die Erzeugung ausreichenden Sprüh- oder Spritzdruckes ausgebildete Kondensat-Fördervorrichtung an Sammel- und Aufbereitungseinrichtungen für das Kondensat angeschlossen sind, während die Dampfkammern mit Einrichtungen zum Abführen des in ihnen anfallenden, von der Rückenfläche der Formwandteile freien Kondensats für dessen Einsatz als Kühlmittel an diese Sammel- und Aufbereitungseinrichtungen angeschlossen sind. Die erfindungsgemäße Vorrichtung läßt sich besonders günstig im erfindungsgemäßen Verfahren betreiben, um optimalen thermischen und energetischen Wirkungsgrad zu erzielen und dabei auch die Zykluszeiten möglichst klein zu halten, weil zwischen den an den Formwandteilen erzeugten Formtemperatur und Entformungstemperatur nur solche Temperaturdifferenz vorgesehen wird, wie sie für das zu verformende Material unbedingt notwendig ist. Die erfindungsgemäße Vorrichtung läßt sich auch hinsichtlich des erforderlichen Dampfbedarfes besonders sparsam betreiben.

Bevorzugt kann bei der erfindungsgemäßen Vorrichtung mindestens eine der Dampfkammern, vorzugsweise jedoch jede Dampfkammer, an ihrem unteren Teil einen Kondensatauffangsumpf als Sammeleinrichtung aufweisen, während im Inneren mindestens einer der Dampfkammern, vorzugsweise jeder Dampfkammer, eine im wesentlichen auf die Rückenfläche des jeweiligen Formwandteiles gerichtete Sprühvorrichtung und/oder Spritzvorrichtung vorgesehen ist, wobei diese Sprühvorrichtung oder Spritzvorrichtung über eine für die Erzeugung ausreichenden Sprüh- oder Spritzdruckes ausgebildete Kondensat-Fördervorrichtung direkt oder indirekt an den Kondensat-Auffangsumpf angeschlossen ist und Einrichtungen zum Aufbereiten des Kondensats, insbesondere dessen Temperatureinstellung in den Kondensat-Auffangsumpf und/oder in die Kondensat-Fördervorrichtung einbezogen sind. Diese grundsätzliche Ausbildung kann bei kleineren erfindungsgemäß ausgestatteten Maschinen eine unmittelbare Verbindung zwischen Kondensat-Auffangsumpf und Sprühvorrichtungen oder Spritzvorrichtung derselben Dampfkammer oder an ein und derselben Maschine vorsehen. Es ist aber auch möglich, bei größeren Anlagen mit mehreren erfindungsgemäß ausgestatteten Schäumformmaschinen zwischen dem Kondensat-Auffangsumpf der Dampfkammern und den Sprühvorrichtungen oder Spritzvorrichtungen für eine Mehrzahl von solchen Maschinen gemeinsame zentrale Einrichtung zum Sammeln und Aufbereiten des Kondensats vorzusehen. Im letzteren Fall sind in das System für die Kondensatgewinnung, das Sammeln des Kondensats, Aufbereiten des Kondensats und Verteilen des Kondensats naturgemäß gesteuerte Ventileinrichtungen einzusetzen, wobei dafür Sorge zu tragen ist, daß das in seiner Temperatur eingestellte Kondensat auch möglichst die eingestellte Temperatur bis zur Einsatzstelle behält. So kann beispielsweise ein über Kondensat-Abführleitungen an die Dampfkammern einer oder mehrerer Formmaschinen angeschlossener Kondensat-Sammelbehälter vorgesehen sein, von welchem das Kondensat mittels der Kondensat-Fördervorrichtung über einen Kondensaterwärmer in zu den Sprühvorrichtungen oder Spritzvorrichtungen der Dampfkammern führende Kondensat-Zuleitungen übergeführt wird. Der Kondensaterwärmer kann beispielsweise ein mit Wasserdampf betriebener Wärmetauscher sein. Das in einem solchen Wärmetauscher anfallende Kondensat kann dem für die Kühlung vorgesehenen Kondensat beigegeben werden. Die Kondensatzuleitungen können als über den Kondensaterwärmer führendes, eine Förderpumpe enthaltendes Kreislaufsystem ausgebildet sein, das mittels den Sprühvorrichtungen oder Spritzvorrichtungen zugeordneter Steuerventile gesteuert entweder auf Kreislaufbetrieb oder Kondensatzuführung zu den Sprühvorrichtungen oder Spritzvorrichtungen umschaltbar ist. Die dabei eingesetzten Steuerventile können bevorzugt jeweils durch ein zusammenwirkendes Ventilepaar gebildet sein, nämlich ein die Kondensatzuführungsleitung zu den Spritz- und Sprühdüsen zeitweilig an den Kondensatkreislauf anschließendes Kondensatventil und ein die Wasserdampfzuführung zu den Spritz- oder Sprühdüsen zeitweilig öffnendes Dampfventil. Dabei kann man den Kondensatkreislauf möglichst dicht bis an die Spritzdüsen oder Sprühdüsen heranführen. Eine unvermeidlich zwischen den Sprühdüsen oder Spritzdüsen und dem Kondensatkreislauf angeordnetes einfaches Kondensatleitungsstück läßt sich hinsichtlich der Temperatur des in ihm geführten Kondensats dadurch verbessern, daß die vom Ventilepaar abgeführten Kondensatzuführunsleitung und Dampfleitung zu einer Wärmetauschereinrichtung, beispielsweise in Art einer Koaxialleitung, vereint sind, in der die Dampfleitung zugleich ein Heizelement für die Kondensatleitung bildet. Eine weitere Betriebsverbesserung läßt sich bei dieser Anordnung dadurch erreichen, daß das Ventilepaar derart gesteuert ist, daß das Dampfventil kurzzeitig vor dem Kondensatventil in Stellung zum Anschließen der Kondensatzuführungsleitung an den Kondensatkreislauf in Offenstellung gebracht wird. Durch das kurzzeitig frühere Öffnen des Dampfventils wird einerseits ein Aufwärmen der Kondensatleitung mittels des zuerst durch die Dampfleitung geführten Dampfes erreicht. Außerdem lassen sich auf diese Weise die Sprühdüsen bzw. Spritzdüsen und die vor ihnen angeordneten Leitungsstücke in einfacher Weise mit Wasserdampf durchspülen, bevor das Kondensat zugeführt wird, um auf diese Weise eine sofort wirksame Kondensatverteilung unter Sicherstellung der gewünschten Kondensattemperatur an der Rückenfläche der Formwandteile zu gewährleisten.

Als weitere wesentliche Verbesserung der erfindungsgemäßen Vorrichtung kann vorgesehen werden, daß mindestens einer der Formwandteile, vorzugsweise jeder Formwandteil an seiner der Dampfkammer zugewandten Rückenfläche mindestens eine Lage von wärmeleitenden, im wesentlichen kugelförmigen Flächenvergrößerungselementen in wäremeleitender Verbindung mit der eigentlichen Formwand und in flächenmäßig dichter Anordnung aufweist. Grundsätzlich soll die Rückenfläche der Formwandteile gemäß der Erfindung in der Lage sein, nennenswerte Kondensatmengen festzuhalten und zu speichern. Man könnte sich vorstellen, daß dies durch Aufrauhen der Rückenfläche angestrebt werden könnte, wobei jedoch die Rauhtiefe so groß sein müßte, daß tatsächlich ein erheblicher Kühleffekt durch Verdampfen der festgehaltenen gespeicherten Kondensatmenge erreichbar wird. Kugelförmige Flächenvergrößerungselemente, wie sie bevorzugt im Rahmen der Erfindung an der Rückenfläche der Formwandteile vorzusehen sind, bilden zwischen sich Aufnahmeräume für Kondensat, die aufgrund der Kugelform der Flächenvergrößerungselemente am Grunde wesentlich aufgeweitet sind und verengten Zugang nach der Dampfkammer hin aufweisen. Somit bilden die kugelförmigen Oberflächenvergrößerungselemente eine Struktur, die derjenigen eines Schwammes vergleichbar ist. Einerseits bilden damit diese Oberflächenvergrößerungselemente einen vorzüglichen Speicher für das beim Aufheizen der Formwandteile anfallende, sich an den noch relativ kühlen Formwandteilen niederschlagende Kondensat. Das Verdampfen von Kondensat während des Aufheizvorganges wird durch die verengten Zugänge zu den in dieser Struktur gebildeten Kondensataufnahmeräumen weitgehend verhindert. Zusammen mit der durch die Oberflächenvergrößerungselemente wesentlich vergrößerten Oberfläche des Formwandteiles gegenüber seiner Dampfkammer ergibt sich hierdurch eine wesentliche Intensivierung und Beschleunigung des Aufheizvorganges, da die mit Kondensat befeuchtete Oberfäche der Oberflächenvergrößerungselemente den Wärmefluß vom Dampf zu dem Formwandteil während des Aufheizens verbessert. Sobald mit dem Ablassen des Dampfes aus der Dampfkammer eine Druckentspannung eintritt, erfolgt ein zweites Kondensieren in der Dampfkammer und Niederschlagen von Kondensat an der Rückenfläche der Formwandteile. Die zwischen den Oberflächenvergrößerungselementen gebildeten Aufnahmeräume werden dabei weiterhin mit Kondensat aufgefüllt. Mit einsetzendem Evakuieren der Dampfkammer wird das Kondensat aus diesen Aufnahmeräumen heraus verdampft, wobei aufgrund der verbesserten Wärmeleitungsverhältnisse und vergrößerten Oberfläche ein wirksames Kühlen der Formwandteile eintritt.

Als besonders vorteilhaft hat es sich dabei herausgestellt, wenn die Flächenvergrößerungselemente sämtlich im wesentlichen gleich große Abmessungen aufweisen. Beispielsweise können die Oberflächenvergrößerungselemente in Kugelform mit Durchmesser zwischen 2mm und 3mm vorgesehen sein. Im Interesse optimaler Wärmeleitung zwischen dem plattenförmigen Teil des Formwandteiles und den Flächenvergrößerungselementen empfiehlt es sich, diese Flächenvergrößerungselemente einstückig mit dem Plattenteil des Formwandteiles auszubilden, beispielsweise anzuformen, vorzugsweise anzugießen.

Ausführungsbeispiele der Erfindung werden im folgenden anhand der Zeichnungen näher erläutert. Es zeigen:

Fig. 1 eine schematische Schnittdarstellung des Formwerkzeuges einer erfindungsgemäßen Vorrichtung;

Fig. 2 einen vergrößerten Teilschnitt eines Formwandteiles im Bereich 2 der Figur 1;

Fig. 3 eine Draufsicht auf die der Dampfkammer zugewandte Rückenfläche des Formwandteiles Bereich 2 der Figur 1;

Fig. 4 eine schematische Kurvendarstellung der Temperatur T des Formwandteiles und des in der zugeordneten Dampfkammer erzeugten Drukkes $p_D$ während des Aufheizens und Kühlens in einer Ausführungsform des erfindungsgemäßen Verfahrens;

Fig. 5 eine Kurvendarstellung ensprechend derjenigen der Figur 4 in bevorzugter Ausführungsform des erfindungsgemäßen Verfahrens;

Fig. 6 die schematische Darstellung einer für ein einziges Formwerkzeugteil vorgesehenen Ausführungsform der erfindungsgemäßen Vorrichtung;

Fig. 7 die schematische Darstellung einer für mehrere Schäumformwerkzeuge oder Schäumformmaschinen anwendbare Ausführungsform der erfindungsgemäßen Vorrichtung;

Fig. 8 ein Detail "X" der Figur 7 in vergrößerter Darstellung;

Fig. 9 ein Detail "Y" der Figur 7 in vergrößerter Darstellung und

Fig. 10 eine gegenüber Figur 7 abgewandelte Ventilanordnung teilweise schematisch.

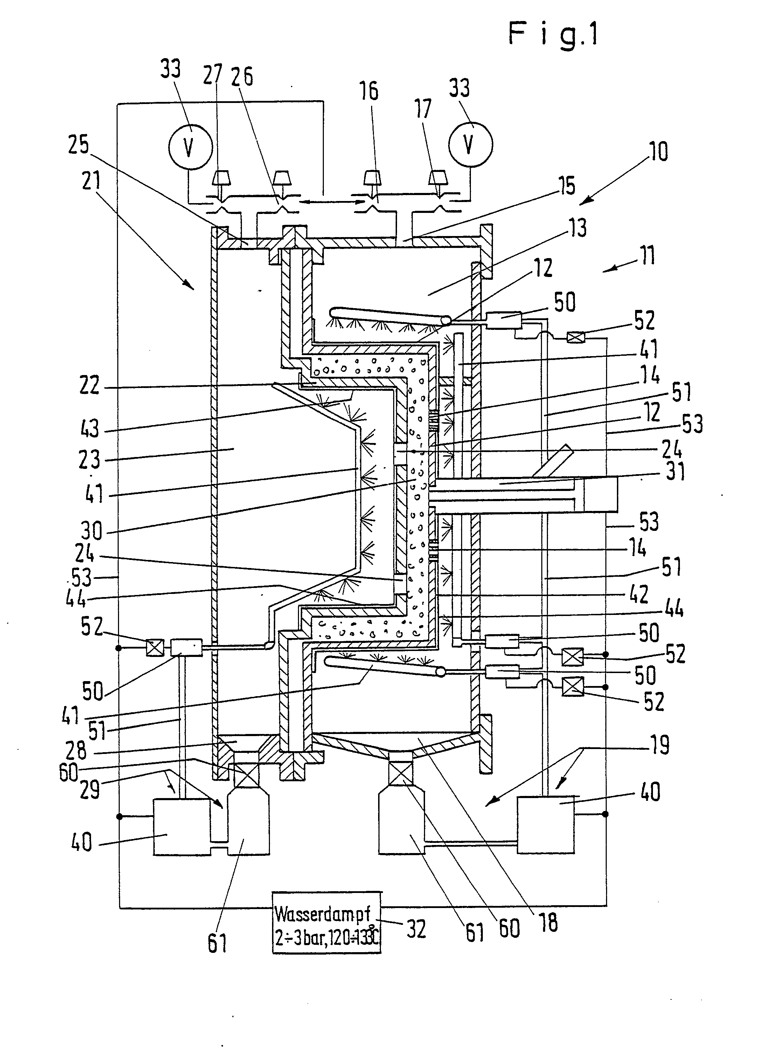

Bei dem in Figur 1 wiedergegebenen Beispiel ist ein zweiteiliges Formwerkzeug 10 mit "Haube" als die eine Werkzeughälfte 11 und "Kern" als die zweite Werkzeughälfte 21 vorgesehen. Jede dieser Werkzeughälften 11 und 21 enthält eine eigentliche Formwand 12 bzw. 22 und an der Rückseite dieser Formwand 12 bzw. 22 eine Dampfkammer 13 bzw. 23. In den Formwänden 12 und 22 sind düsenförmige Öffnungen 14 bzw. 24 angebracht, durch die Dampf aus der jeweiligen Dampfkammer 13 bzw. 23 in den zwischen den Formwänden 12 und 22 gebildeten Formhohlraum 30 eintreten kann bzw. Luft, Dampf und sonstige gasförmige Medien aus dem Formhohlraum 30 in die Dampfkammern 13 und 23 abgesaugt werden können. In den Formhohlraum 30 münden in herkömmlicher Weise ein mit Preßluft betätigter Injektor 31 für die in den Formhohlraum 30 einzuführenden expandierbaren, ggf. vorgeschäumten Kunststoffpartikel.

Jede der beiden Dampfkammern 13 und 23 ist mit einem Anschluß 15 bzw. 25 ausgestattet. Dieser Anschluß 15 bzw. 25 ist jeweils über ein Dampfeinlaßventil 16 bzw. 26 an einen Dampferzeuger 32 angeschlossen und über je ein Vakuumventil 17 bzw. 27 an ein Vakuumsystem, beispielsweise eine Vakuumpumpe 33 (die in Figur 1 doppelt dargestellt, aber in Wirklichkeit für beide Formhälften 11 und 21 dieselbe sein kann). An ihrem unteren Ende ist jede der Dampfkammern 13 und 23 mit einem Kondensat-Auffangsumpf 18 bzw. 28 ausgestattet. An den Kondensat-Auffangsumpf 18 bzw. 28 ist jeweils über ein Kondensat-Absperrventil 60 ein Kondensat-Sammelgefäß 61 angeschlossen, von welchem das gesammelte Kondensat in eine Kondensat-Fördervorrichtung 19 bzw. 29 abgeführt wird. Die Kondensat-Fördervorrichtung 19, 29 enthält jeweils eine Sammel- und Aufbereitungseinrichtung 40 für das Kondensat. In diesen Sammel- und Aufbereitungseinrichtungen 40 sind u.a. ein Kondensaterwärmer und ein Druckerzeuger enthalten. Der Kondensaterwärmer ist bevorzugt in Art eines Wärmetauschers ausgebildet, in welchem Wasserdampf als Wärmespendermedium benutzt wird. Das in diesem Wärmetauscher aus dem Wasserdampf anfallende Kondensat kann innerhalb der Sammel- und Aufbereitungseinrichtung 40 dem aus dem jeweiligen Kondensat-Sammelgefäß 61 der Werkzeughälften 11 und 21 abgezogenen Kondensat beigemischt werden. In den Sammel- und Aufbereitungseinrichtungen 40 wird das Kondensat auf die gewünschte Temperatur gebracht, mit der es auf die Rückenfläche der Formwandteile 12 und 22 gespritzt oder gesprüht werden soll. Da das Aufsprühen oder Aufspritzen des Kondensats in einem Zeitpunkt des Verfahrens erfolgen soll, bei welchem in den Dampfkammern 13 und 23 im wesentlichen Normaldruck herrscht, ist die am Kondensat einzustellende Temperatur bei 100°C oder knapp darunter, beispielsweise 98°C. Von den Sammel- und Aufbereitungseinrichtungen 40 führen Kondensatleitungen 51 zu an den Werkzeughälften 11 und 21 angebrachten Kondensatmischkopf 50, die mit Wasserdampf betrieben werden. Hierzu sind die Kondensatmischköpfe 50 über zeitlich gesteuerte Dampfventile 52 an die vom Dampferzeuger 32 kommende Dampfleitung 53 angeschlossen. An diese Dampfleitung 53 sind auch die Dampfventile 16 und 26 und die Sammel- und Aufbereitungseinrichtungen 40 angeschlossen.

Die Kondensatmischköpfe 50 beschicken Sprühvorrichtungen oder Spritzvorrichtungen 41, die im Inneren der Dampfkammern 13 und 23 angebracht und gegen die Rückenfläche 42 des Formwandteils 12 bzw. die Rückenfläche 43 des Formwandteils 22 gerichtet sind.

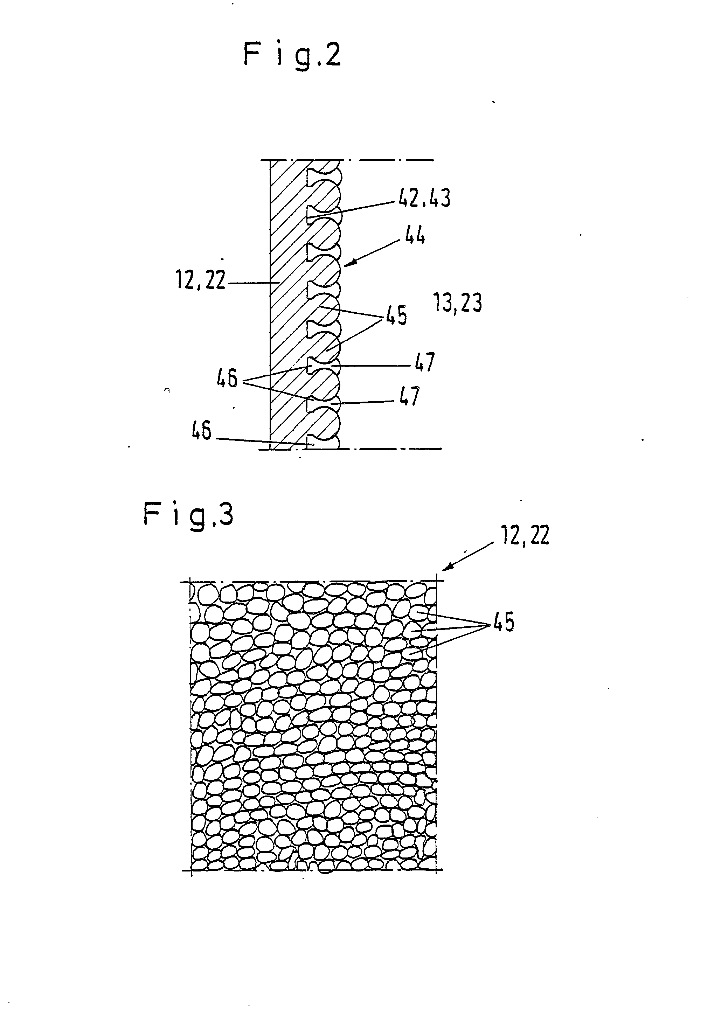

Wie aus Figur 1 in Verbindung mit den Figuren 2 und 3 ersichtlich, tragen die Formwandteile 12 und 22 an ihrer zu der jeweiligen Dampfkammer 13 bzw. 23 gerichteten Rückenfläche 42 bzw. 43 je eine einlagige Schicht 44 aus Flächenvergrößerungselementen 45. Diese Flächenvergrößerungselemente haben im dargestellten Beispiel im wesentlichen Kugelform und sind in dichtester gegenseitiger Anordnung direkt an die Formwandteile 12 und 22 angeformt. Beispielsweise können die Formwandteile 12 und 22 zusammen mit ihren Flächenvergrößerungselementen 45 aus Aluminiumlegierung gegossen sein.

Wie aus Figur 2 ersichtlich, bilden die im wesentlichen kugelförmigen Flächenvergrößerungselemente 45 am Grund der Schicht 44 verbreiterte Aufnahmeräume 46 für Kondensat, während die aus diesen Aufnahmeräumen 46 zur jeweiligen Dampfkammer 13 bzw. 23 führenden Durchlässe 47 verengt sind. Auf diese Weise wird durch die Flächenvergrößerungselemente 45 nicht allein eine wesentliche Oberflächenvergrößerung der Rückenfläche 42 bzw. 43 der Formwandteile 12 und 22 gegenüber der jeweiligen Dampfkammer 13 bzw. 23 erreicht, sondern auch ein hoch wirksamer Speicherraum für beim Aufheizen der Formwandteile 12 und 23 entstehendes und sich an den Rückenflächen 42 und 43 niederschlagendes Kondensat gebildet. Die Größe und die Form der Flächenvergrößerungselemente 45 kann von Anwendungsfall zu Anwendungsfall variieren. Für Werkzeuge der angesprochenen Art, nämlich Werkzeuge zum Herstellen von Formlingen aus expandierbaren Kunststoffpartikeln, hat sich Kugelform mit Durchmesser zwischen 2mm und 3mm als besonders vorteilhaft für die Flächenvergrößerungselemente 45 gezeigt.

Während des Betriebes der Schäumformvorrichtung wird die Temperatur der Formwandteile 12 und 22 im Formwerkzeug 10 so eingestellt, daß sie bei geöffnetem Formwerkzeug etwa der Stabilisierungstemperatur des zu verarbeitenden expandierbaren Kunststoffmaterials entspricht. Bei Verarbeitung von expandierbarem Polystyrol liegt diese Temperatur bei etwa 65°C bis 90°, vorzugsweise bei etwa 70 bis 80°C. Nachdem das Formwerkzeug 10 bei dieser Temperatur der Formwandteile 12 und 22 geschlossen worden ist, wird der Formhohlraum 30 mittels des Injektors 31 mit den expandierbaren Kunststoffpartikeln gefüllt, beispielsweise mit Perlen aus expandierbarem, vorgeschäumtem Polystyrol, die einen Durchmesser bei 2mm bis 5mm aufweisen können.

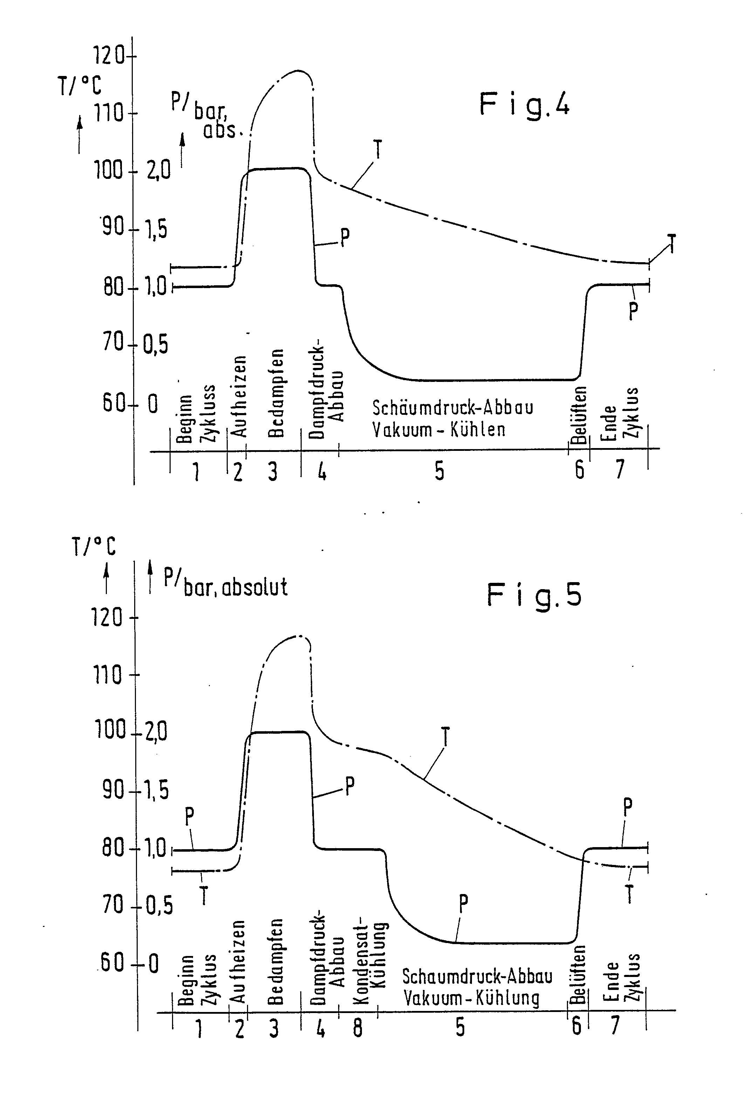

Wie die Figuren 4 und 5 zeigen, kann ein Arbeitszyklus eingeteilt werden in: 1) Beginn des Zyklus, 2) Aufheizen, 3) Bedampfung des im Formhohlraum befindlichen geblähten Kunststoffs, 4) Dampfdruckabbau (Druckentspannung in der Dampfkammer), 5) Schaumdruckabbau (durch Kühlen und Absaugen von gasförmigen Medien aus dem Formhohlraum durch die Düsenöffnungen 24 in die Dampfkammer, 6) Belüften der evakuierten Dampfkammer und 7) Entformen und Ende des Zyklus. Bei Zyklusbeginn 1) wird die Form geschlossen. Nach dem Schließen der Form wird der Formhohlraum 30 mittels des Injektors 31 mit den expandierbaren Kunststoffpartikeln gefüllt. Anschließend erfolgt das Aufheizen 2 der Formwandteile 12 und 22 durch Einleiten von Wasserdampf mit etwa 120°C Temperatur in die Dampfkammern 13 und 23. Die Formwandteile werden auf etwa 115°C geheizt. Der in den Dampfkammern aufrechterhalte. Druck des heißen Wasserdampfes kann etwa 2 bar betragen, also etwa 1 bar Überdruck gegenüber dem Atmosphärendruck. Während des Aufheizvorganges 2 werden Teile des in den Dampfkammern 13 und 23 unter einem Absolutdruck von 2 bar gehaltenen Wasserdampfes durch die Düsen 14 und 24 von den Dampfkammern 13 und 23 her in den Formhohlraum 30 und in dessen Füllung von expandierbaren Kunststoffpartikeln gepreßt. Hierdurch erfolgt ein intensives Erwärmen der Kunststoffpartikel unter Erweichen der Partikel-Oberflächen. Als nächster Schritt erfolgt dann Dampfdruckabbau, d.h. das Ablassen des Wasserdampfes aus den Dampfkammern 13 und 23. Dies hat zur Folge, daß auch ein Druckabbau im gasförmigen Medium im Inneren des Formhohlraums 30 eintritt, so daß die in dem Formhohlraum 30 enthaltenen expandierbaren Kunststoffpartikel momentan stark aufblähen und an ihren Oberflächen zusammenschweißen. Die an den dem Formhohlraum 30 zugewandten Oberflächen der Formwandteile 12 und 22 liegenden Kunststoffpartikel werden dabei an die Formwandoberfläche angepreßt und ergeben dadurch eine glatte Oberfläche des Formlings.

Während des Aufheizschrittes 2) der Formwandteile 12 und 22 sowie während des Bedampfungsschrittes 3 hat sich sowohl an der jeweiligen Dampfkammer 13 bzw. 23 zugewandten Rückenfläche 42 bzw. 43 der Formwandteile 12 und 22 Wasser als Kondensat aus dem Wasserdampf niedergeschlagen. Dieses Kondensat besetzt die Hohlräume 46 zwischen den Flächenvergrößerungselementen 45 und wird dort zunächst gespeichert. Beim Bedampfungsschritt 3)' wird auch Kondensat im Inneren des Formhohlraumes bzw. in der dort vorhandenen Füllung von expandierbaren Kunststoffpartikeln gebildet. Nach dem Dampfdruck-Abbauschritt 4) erfolgt dann ein Evakuieren der Dampfkammern 13 und 23 bis auf etwa 200 bis 300_mbar (Absolutdruck), wodurch der Schaumdruckabbau 5) erfolgt. Mit dem Evakuieren der Dampfkammern 13 und 23 erfolgt auch ein Absaugen von Wasserdampf durch die Düsenöffnungen 14 und 24 hindurch aus dem Formhohlraum 30 und dem darin befindlichen porösen Formling, wobei auch sich evtl. dort gebildetes Kondensat wieder verdampft und als Wasserdampf abgesaugt wird. Nach dem Expandieren und Zusammenschweißen der Kunststoffpartikel tritt somit eine merkliche Kühlung vom Inneren her des im Formhohlraum 30 gebildeten Formlings auf.

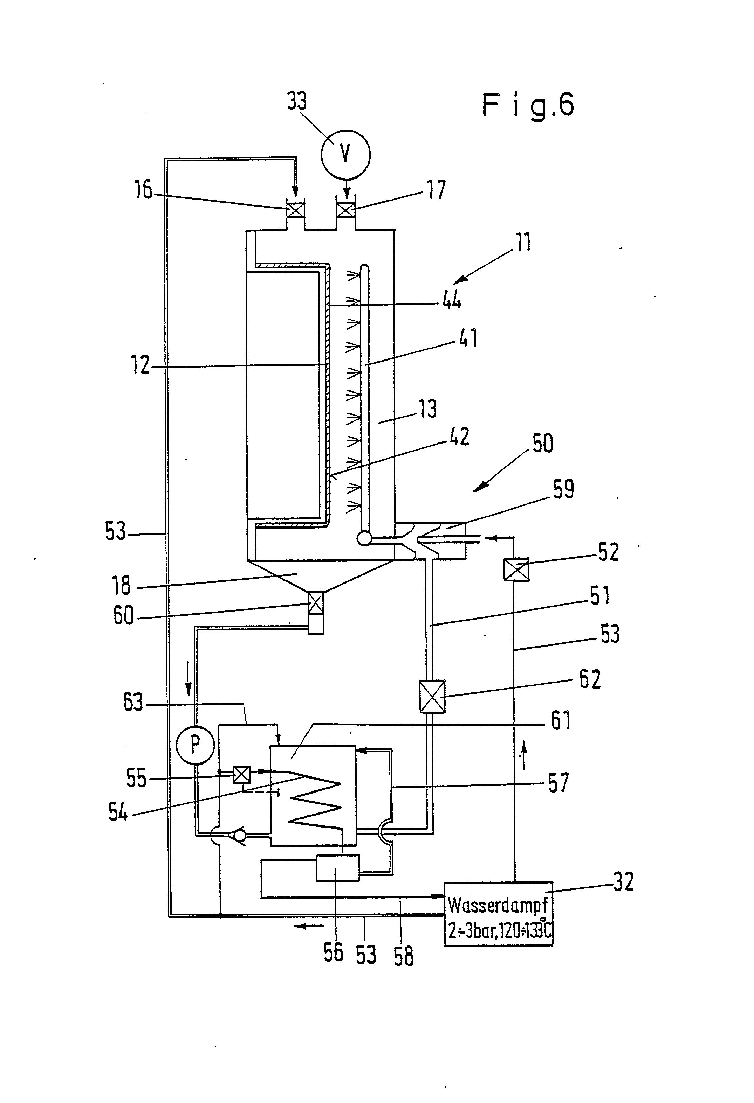

Bei der in Figur 4 wiedergegebenen Ausführungsform des Verfahrens wird zugleich mit dem Evakuieren der Dampfkammern 13 und 23 das in die Hohlräume 46 zwischen den Flächenvergrößerungselementen 45 aufgenommene kondensierte Wasser verdampft. Es erfolgt dadurch von der Oberfläche der Flächenvergrößerungselemente 45 her ein Kühlen der Formwandteile 12 und 22, das gemäß der Darstellung der Figur 4 bis etwa zu einer ungefähren Stabilisierungstemperatur des expandierten Kunststoffs bei etwa 85° C führt. Diese Arbeitsweise kann bei sehr einfachen Formen ausgeführt werden, die keine allzu hohen Anforderungen an die Stabilisierung des geschäumten Werkstoffes stellen. In den meisten Anwendungsfällen, insbesondere bei Herstellung von Gegenständen mit komplizierterer Form, wird das beim Aufheizschritt 2) in die Aufnahmeräume 46 eindringende und zunächst gespeicherte Kondensat nicht ausreichende Kühlung durch Verdampfen hervorbringen können. Es wird daher die in Figur 5 dargestellte Verfahrensweise einzusetzen sein, bei der zwischen dem Dampfdruck-Abbauschritt 4) und dem Evakuieren der Dampfkammer bzw. dem Schaumdruck-Abbauschritt 5) noch ein zusätzlicher Kondensat-Aufgabeschritt 8) eingefügt ist. In diesem Kondensat-Aufgabeschritt 8) wird Wasserdampfkondensat mittels Wasserdampf auf die Rückenfläche 42 bzw. 43 der Formwandteile 12 und 22 gespritzt oder gesprüht. Das aufzubringende Kondensat befindet sich dabei etwa auf seiner dem in den Dampfkammern 13 und 23 augenblicklich herrschenden Druck entsprechenden Siedetemperatur oder 1 K bis 2_K unterhalb dieser Siedetemperatur. Es erfolgt somit keine Kühlung der Formwandteile 12 und 22 durch Entzug kalorischer Wärme durch kaltes Kühlmittel, wie dies aus dem horizontalen Verlauf der Temperaturkurve T in diesem Bereich aus Figur 5 ersichtlich ist. Stattdessen wird jedoch durch das Aufbringen des praktisch auf Siedetemperatur erhitzten Kondensats ein vollständiges Anfüllen der zwischen den Flächenvergrößerungselementen 45 gebildeten Aufnahmeräume 46 und ein Befeuchten der gesamten Oberfläche der Oberflächenvergrößerungselemente 45 mit heißem Kondensat hervorgerufen. Mit dem Evakuieren der Dampfkammern 13 und 23, also mit Einleitung des Schaumdruck-Abbauschrittes 5 tritt dann das Verdampfen des Kondensats ein, was zur Kühlung der Formwandteile 12 und 22 führt, so daß diese bei Ende des Schaumdruck-Abbauschrittes 5 eine Temperatur von etwa 78° annehmen. Durch das kombinierte Kühlen des Formlings von innen her und von den gekühlten Formwandteilen 12 und 22 her ist bei Ende des Schaumdruck-Abbauschrittes 5 eine sichere Stabilisierung des Formlings erfolgt. Im Belüftungsschritt 6) werden sodann die Dampfkammern 13 und 23 wieder belüftet, so daß im Schritt 7) die Form geöffnet und der Formling entnommen werden kann. In Figur 6 ist eine vereinfachte Ausführungsform der Sammel- und Aufbereitunsvorrichtung und der Kondensatfördervorrichtung bei Anwendung an einer Werkzeughälfte 11 schematisch dargestellt. Wie im Beispiel der Figur 1 ist die Werkzeughälfte 11 mit einem Dampfeinlaßventil 16 und einem Vakuumventil 17 ausgestattet. Dabei ist das Dampfeinlaßventil auch mit einer Ventilstellung für Dampfablaß bis auf Atmosphärendruck oder Normaldruck (1013 hPa) ausgestattet, während das Vakuumventil 17 auch mit Einrichtungen zum Belüften der Dampfkammer 13 versehen ist. Das in die Werkzeughälfte 11 eingesetzte Formwandteil 12 ist an seiner Rückenfläche 42 mit einer Schicht 44 aus Flächenvergrößerungselementen versehen. Der Rückenfläche 42 des Formwandteils 12 ist eine Sprüh- oder Spritzvorrichtung 41 gegenübergestellt, die von einem an der Werkzeughälfte 11 angebrachten, mit Wasserdampf betriebenen Kondensatmischkopf 50 her mit einem Kondensat-Wasserdampf-Gemisch beschickt wird. In ihrem unteren Teil weist die Werkzeughälfte 11 einen Kondensat-Auffangsumpf 18 auf, der über ein Kondensat-Absperrventil 60 und eine Kondensatleitung mit Förderpumpe und Rückschlagventil mit einem Kondensat-Sammelgefäß 61 verbunden ist.

Das Kondensat-Sammelgefäß 61 bildet zusammen mit den in ihm enthaltenen und mit ihm verbundenen Elementen eine Kondensat-Fördervorrichtung mit Sammel-und Aufbereitungseinrichtung für das Kondensat wie folgt:
Im Kondensat-Sammelgefäß ist ein mit Wasserdampf beschickter Wärmetauscher 54 angebracht, der beispielsweise in Art einer Rohrschlange ausgebildet sein kann. Dieser Wärmetauscher 54 ist über ein temperaturgesteuertes Dampfventil 55 an die vom Dampferzeuger 32 kommende Dampfleitung 53 angeschlossen. Die Temperatursteuerung des Dampfventils 55 ist in Figur 6 nur durch einen in das Kondensat-Sammelgefäß 61 greifenden Temperaturfühler angedeutet. In der Praxis wird außerdem auch eine Einrichtung zum Einstellen der gewünschten Kondensattemperatur, beispielsweise zwischen 98°C und 100°C, vorzusehen sein. Das sich im Wärmetauscher bildende Kondensat wird in einem Kondensatabscheider 56 gewonnen und über eine Kondensat-Rückleitung in das Kondensat-Sammelgefäß übergeführt. Der den Kondensatabscheider 56 verlassende restliche Wasserdampf wird im dargestellten Beispiel über eine Dampfrückleitung 58 zum Dampferzeuger 32 zurückgeführt.
Von der Dampfleitung 53 kann eine Dampfzweigleitung 63 zum oberen Teil des Kondensat-Sammelgefäßes geführt sein, so daß oberhalb des gesammelten Kondensats ein Dampfpolster mit einem Druck von 3 bar bis 5 bar aufrechterhalten wird, um das Kondensat über die Kondensatleitung zu der Sprüh- oder Spritzvorrichtung 41 zu drücken. Bei alleiniger Benutzung eines solchen Dampfpolsters zum Fördern des Kondensats muß in die Kondensatleitung 51 ein zeitlich gesteuertes Absperrventil 62 eingesetzt sein, das nur während des in Figur 5 gezeigten Zeitabschnittes 8 zum Aufbringen von Kondensat auf die Rückenfläche 42 des Formwandteils 12 zu öffnen ist.

Das Ventil 62 ist zeitlich derart zu steuern, daß es nur während des in Figur 5 dargestellten Zeitraumes 8 öffnet. Zusätzlich zum Ventil 62 ist ein Kondensatmischkopf 50 vorgesehen, um dem Kondensat Frischdampf zuzuführen. Dabei ist in die zum Kondensatmischkopf 50 führenden Abschnitt der Dampfleitung 53 ein zeitgesteuertes Dampfventil 52 einzusetzen, das nur während des Zeitabschnittes 8 gemäß Figur 5 geöffnet ist.

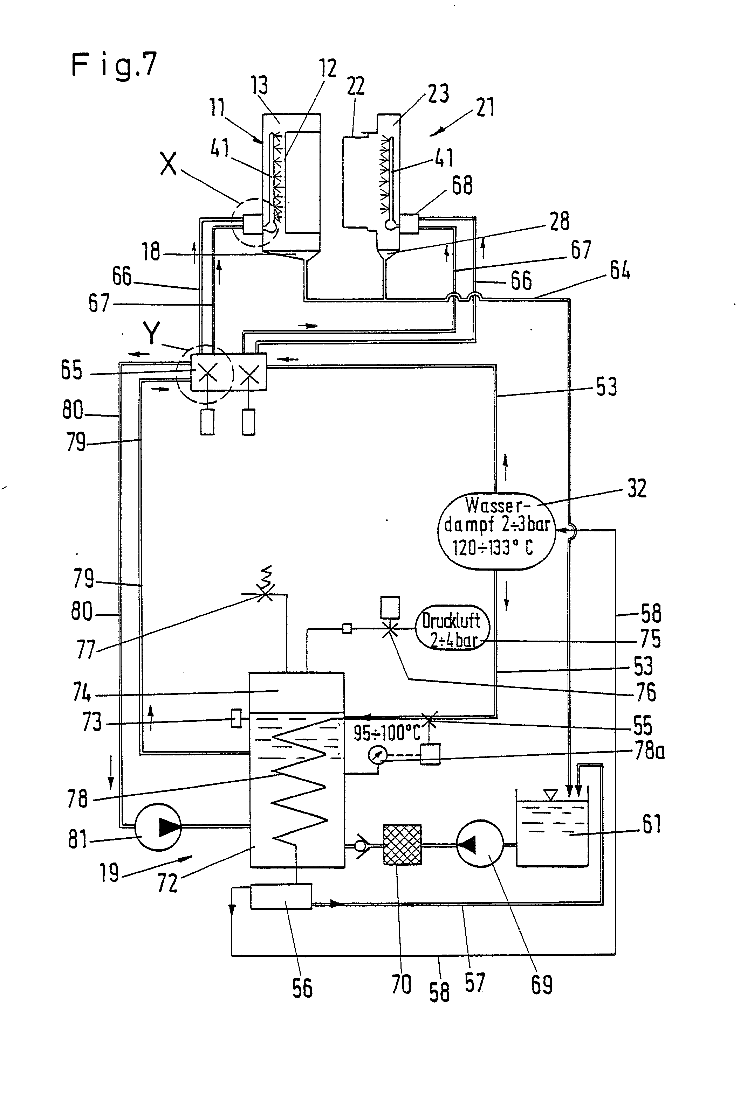

Eine bevorzugte Ausführungsform für die Kondensat-Fördervorrichtung mit Sammel- und Aufbereitungsvorrichtung für das Kondensat ist in den Figuren 7 bis 9 wiedergegeben. In dieser Ausführungsform sind - abgesehen von Steuerventilen und Kondensatinjektoren - die Kondensat-Fördervorrichtung und die Sammel- und Aufbereitungseinrichtungen für das Kondensat zentral für eine Mehrzahl von Schäumformmaschinen auszubilden, wie dies durch den mittels strichpunktierter Linie abgetrennten unteren Teil der Figur 7 zum Ausdruck gebracht ist.

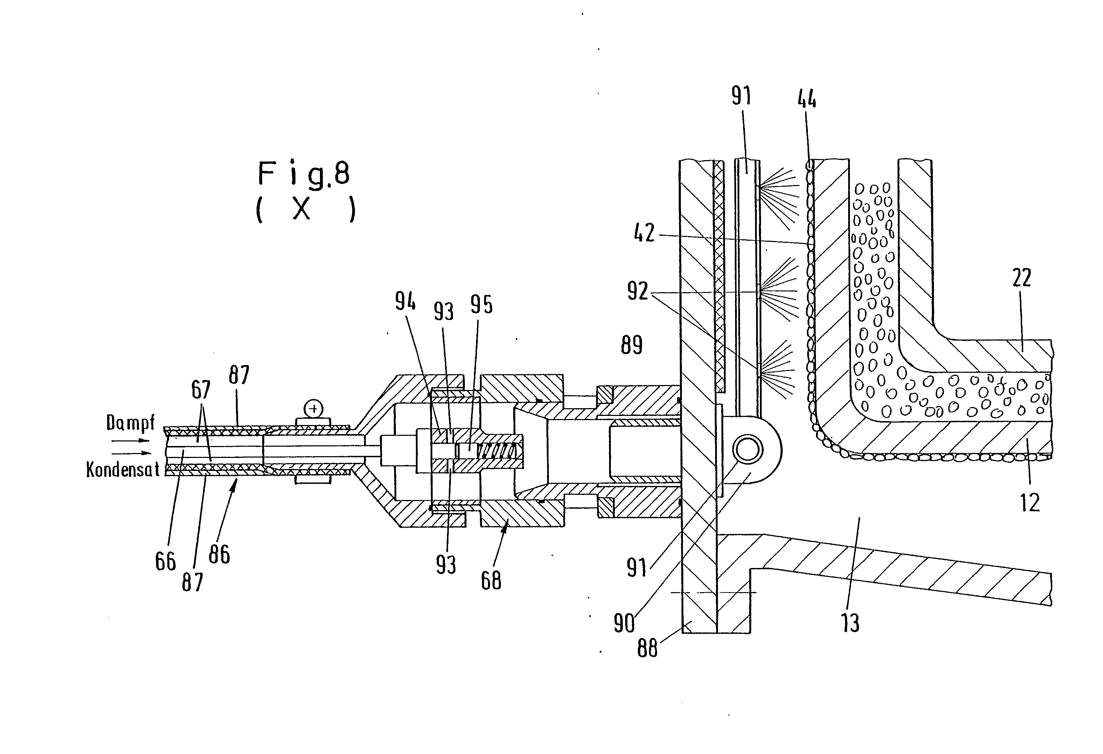

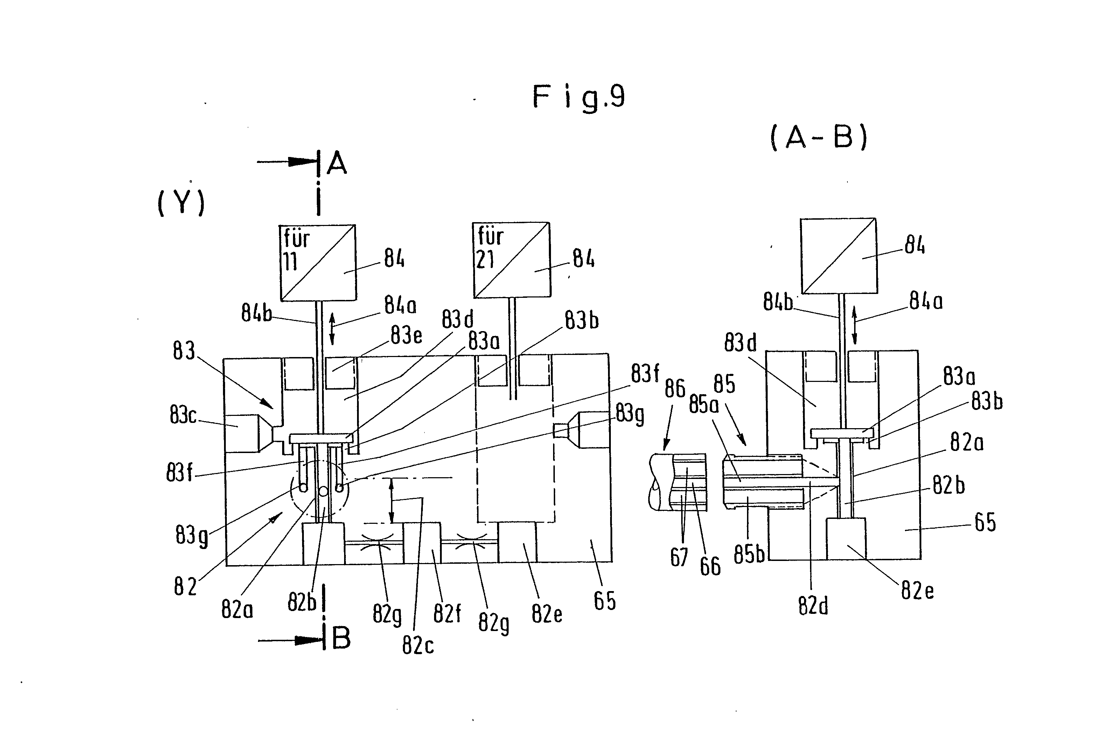

Im oberen Teil der Figur 7, der sich auf die an der Schäumformmaschine angebrachten Teile bezieht, sind die beiden Werkzeughälften 11 und 21 schematisch dargestellt. Die Werkzeughälfte 11 enthält den Formwandteil 12 und die dahinter angeordnete Dampfkammer 13, in welcher die auf die Rückenfläche des Formwandteils 12 gerichtete Sprüh- oder Spritzvorrichtung 41 angebracht ist. Entsprechend enthält die Werkzeughälfte 21 den Formwandteil 22 und die dahinter angeordnete Dampfkammer, 23, in der ebenfalls eine auf die Rückenfläche des Formwandteiles 22 gerichtete Sprüh- oder Spritzvorrichtung 41 angebracht ist. Die Werkzeughälfte 11 weist im unteren Teil einen Kondensat-Auffangsumpf 18 und die Werkzeughälfte 21 in ihrem unteren Teil einen Kondensat-Auffangsumpf 28 auf, von beiden Kondensat-Auffangsümpfen 18 und 28 führt eine Kondensat-Ableitung 64 zu einem zentralen Kondensat-Sammelgefäß 61. Jede angeschlossene Schaumformmaschine ist mit einem eigenen Ventilblock 65 ausgestattet, der die erforderlichen Ventile enthält, um das aufbereitete Kondensat und Wasserdampf den Sprüh- oder Spritzvorrichtungen 41 in den Dampfkammern 13 bzw. 23 der Werkzeughälften 11 bzw. 21 gesteuert zuzuführen. Die im Ventilblock 65 für eine Werkzeughälfte 11 vorgesehenen Ventile sind in Figur 9 schematisch dargestellt. Gleiche Ventile sind auch für die Werkzeughälfte 21 im Ventilblock 45 vorhanden. Vom Ventilblock 65 führen jeweils eine Kondensatzuführungsleitung 66 und eine Wasserdampf-Zuführungsleitung 67 zum Eingang jeder Sprüh- oder Spritzvorrichtung 41, wobei an dem Einlaß zur jeweiligen Sprüh- oder Spritzvorrichtung 41 ein Misch- und Injektorkopf 68 für aufbereitetes Kondensat und Wasserdampf vorgesehen ist. Ein solcher Misch- und Injektorkopf 68 ist in Figur 8 in mehr Einzelheiten dargestellt. Die zentrale Kondensat-Fördervorrichtung 19 mit Sammel- und Aufbereitungseinrichtung für das Kondensat weist einen Kondensat-Sammelbehälter 61 auf, von welchem das gesammelte Kondensat über eine Förderpumpe 69 und ein Kondensatfilter 70 und ein Rückschlagventil 71 in einen Kondensaterhitzer 72 gedrückt wird. Die Förderpumpe 69 wird mittels einer am Kondensaterhitzer 72 angebrachten Niveausonde 73 gesteuert, also eingeschaltet, sobald das Niveau im Kondensaterhitzer unter die Anbringungshöhe der Niveausonde 73 absinkt. Im oberen Teil des Kondensaterhitzers 72 wird ein Luftpolster 74 aufrechterhalten, das durch Einführen von Druckluft aus einer Druckluftquelle 75 über ein Druckluftventil 76 gebildet und evtl. von Zeit zu Zeit ergänzt und erneuert wird. Die Druckluftquelle 75 und das Druckluftventil 76 können mittels geeigneter Kupplungseinrichtung zeitweilig vom Kondensaterhitzer 72 abnehmbar sein. Schließlich weist der Kondensaterhitzer 72 an seinem oberen Teil ein Sicherheitsventil 77 auf. Der im Luftpolster aufrecht erhaltene Druck beträgt 2 bar bis 4 bar. Im Inneren des Kondensaterhitzers 72 ist ein Wärmetauscher 78, beispielsweise in Art einer Rohrschlange, angebracht, der vom zentralen Dampferzeuger 32 her mit Wasserdampf unter einem Druck zwischen 2 bar und 3 bar und einer Temperatur zwischen 120°C und 133°C über ein temperaturgesteuertes Dampfventil 55 beschickt wird. Das Dampfventil 55 ist dazu an eine Temperatursonde 78a für das im Kondensaterhitzer enthaltene Kondensat angeschlossen. An dieser Temperatursonde ist die gewünschte Kondensattemperatur einzustellen, beispielsweise 95°C bis 100°C. Der Ausgang des Wärmetauschers 78 ist an einen Kondensatabscheider 56 angeschlossen, von welchem eine Kondensat-Rückleitung 57 zum Kondensat-Sammelgefäß 61 führt und eine Dampfrückleitung 58 zum Dampferzeuger 32.

Vom Kondensaterhitzer 72 führen eine Kondensat-Vorlaufleitung 79 und eine Kondensat-Rücklaufleitung 80 zum Ventilblock 65. In die Kondensat-Rücklaufleitung ist eine Umwälzpumpe 81 eingesetzt, so daß zwischen dem zentralen Kondensaterhitzer 72 und jedem Ventilblock 65 an den Schäumformmaschinen ein Kondensatkreislauf gebildet ist. In diesem Kreislauf wird das Kondensat auf der gewünschten Kondensattemperatur zwischen 95°C, vorzugsweise bei etwa 98°C, gehalten und auf einem Druck zwischen 2 bar und 4 bar. Von der zentralen Einrichtung her führt ferner eine Dampfleitung 53 zum Ventilblock 65.

In Figur 9 ist der Ventilblock 65 schematisch in zwei Schnitten dargestellt, und zwar im linken Teilschnitt in einer für beide Ventilpaare gemeinsamen axialen Ebene, während im rechten Teil der Figur 9 ein Schnitt in einer zur Schnittebene des linken Teiles rechtwinklig stehenden, axialen Ebene A-B dargestellt ist. Wie aus Figur 9 ersichtlich, ist im Ventilblock 65 für jede Werkzeughälfte 11 und 21 je ein Ventilepaar vorgesehen, wobei das für die Werkzeughälfte 21 vorgesehene Ventilepaar nur als gestrichelter Block angedeutet ist. Jedes Ventilepaar enthält ein Kondensatventil 82 und ein Dampfventil 83 und ist mit einer für das Ventilepaar 82, 83 gemeinsamen Betätigungsvorrichtung 84 versehen. Das Dampfventil 83 weist einen Ventilteller 83a auf, der in Schließstellung auf einem ringförmigen Ventilsitz 83b abdichtend sitzt. Der Dampfeinlaß 83c führt zu einer Dampfkammer 83d, innerhalb deren der Ventilteller 83a im Sinne des Doppelpfeiles 84a mittels der Betätigungsstange 84b zwischen Schließstellung und vollständiger Offenstellung des Ventilepaares 82, 83 bewegbar ist, beispielsweise bis an die Innenseite des Ventildeckels 83e. Von der innerhalb des ringförmigen Ventilsitzes 83b gebildeten Bodenfläche der Ventilkammer 83d führen Dampfkanäle 83f zu Verbindungsbohrungen 83g zu einem den Ventilauslaß bildenden Anschlußstutzen 85, und zwar dessen äußeren Ringkanal 85b. An diesen Anschlußstutzen 85 ist die in Figur 8 gezeigte und in Verbindung mit Figur 8 beschriebene Koaxialleitung 86 angeschlossen.

Das Dampfventil 82 weist einen abdichtend in einer Ventilbohrung 82a geführten Ventilstift 82b auf. Dieser Ventilstift 82b ist zentral an der Dichtungsseite des Ventiltellers 83a befestigt, so daß die Betätigungsbewegung des Ventiltellers 83a im Sinne des Doppelpfeiles 84a eine entsprechende axiale Verschiebungsbewegung des Ventilstiftes 82b hervorruft. In einem axialen Abstand 82c mündet ein Auslaßkanal 82d in die Ventilbohrung 82a, während das der Dampfkammer 83d abgewandte und dem freien Ende des Ventilstiftes 82b zugeordnete Ende der Ventilbohrung 82a in den Kondensateinlaß 82e mündet. Der Auslaßkanal 82d führt in den Innenkanal 85a des Anschlußstutzens 85 und von dort in die zentrale Kondensat-Zuführungsleitung der Koaxialleitung 86.

Um den in Figur 7 gezeigten Kondensatkreislauf zwischen dem Ventilblock 65 und dem Kondensaterhitzer 72 ständig aufrecht zu erhalten, ist ein zusätzlicher Kondensatauslaß 82f vorgesehen und mittels Bohrungen, vorzugsweise Drosselbohrungen 82g, mit den beiden Kondensateinlässen 82e verbunden. An die Kondensateinlässe 82e ist die in Figur 7 gezeigte Kondensat-Vorlaufleitung 79 anzuschließen, während der zusätzliche Kondensatauslaß 82f mit der in Figur 7 gezeigten Kondensat-Rücklaufleitung 80 zu verbinden ist.

Die Arbeitsweise des Ventilepaares ist wie folgt: In dem in Figur 9 gezeigten geschlossenen Zustand sind sowohl die Kondensatzuführungsleitung 66 als auch die Wasserdampf-Zuführungsleitung 67 von den entsprechenden Einlässen abgesperrt. Wird jedoch der Ventilteller 83a von seinem ringförmigen Ventilsitz 83b abgehoben, so gelangt Wasserdamf in die Dampfkanäle 83f und von dort über die Verbindungsbohrungen 83g in den äußeren Ringkanal 85b des Anschlußstutzens 85 und von diesem in die Wasserdampf-Zuführungsleitung 67 der Koaxialleitung 87 und von dort wiederum in den Misch- und Injektorkopf 68 und somit in die angeschlossenen Sprühvorrichtungen bzw. Spritzvorrichtungen 41. Der Auslaßkanal 82d des Kondensatventils 82 ist jedoch noch solange von dem Kondensateinlaß 82e abgesperrt, bis das freie Ende des Ventilstiftes 82b den axialen Abstand 82c hinter sich gebracht und damit den Eingang in den Auslaßkanal 82d in der Ventilbohrung 81a freigelegt hat. Umgekehrt wird beim Schließen des Ventilepaares 82, 83 zunächst der Eingang von der Ventilbohrung 82a zum Auslaßkanal 82d durch den Ventilstift 82b abgedeckt. Erst nachdem das freie Ende des Ventilstiftes 82b über den axialen Abstand 82c bewegt worden ist, gelangt der Ventilteller 83a auf den ringförmigen Ventilsitz 83b. Auf diese Weise wird erreicht, daß vor dem Zuführen des Kondensats zu den Sprühvorrichtungen bzw. Spritzvorrichtungen 41 ein Durchspülen des in Figur 8 gezeigten Misch- und Injektorkopfes 68 und der angeschlossenen Teile der Sprühvorrichtung bzw. Spritzvorrichtung 41 mit Wasserdampf erfolgt. Nach Absperren der Kondensat-Zufuhr erfolgt noch ein Nachspülen des Misch- und Injektorkopfes 68 und der angeschlossenen Teile der Sprühvorrichtung bzw. Spritzvorrichtung mit Wasserdampf. Die Zeitdauer des Vorspülens und Nachspülens mit Wasserdampf wird bei festgelegter Größe des axialen Abstandes 82c durch die Betätigungsgeschwindigkeit des Ventilepaares bestimmt und lassen sich dementsprechend in der Betätigungsvorrichtung 84 einrichten oder einstellen.

Die Benutzung zweier getrennter Ventilepaare 82, 83 und getrennter Betätigungsvorrichtungen 84 für die beiden Werkzeughälften hat ihre Bedeutung darin, daß die Zuführung von Kondensat auf die Rückenfläche der in den unterschiedlichen Werkzeughälften angebrachten Formwandteile unterschiedlich ist. Dies wird vielfach durch die unterschiedliche Formgebung und durch die Tatsache notwendig, daß vielfach zum Bedampfen des zu verarbeitenden Werkstoffs in dem Formhohlraum der Wasserdampf von der Dampfkammer der einen Werkzeughälfte zugeführt, durch den im Formhohlraum enthaltenen Werkstoff hindurchgedrückt und von der Dampfkammer der anderen Werkzeughälfte aufgenommen wird. Es ergibt sich auch durch den Betrieb der Schäumformvorrichtung das Erfordernis, unterschiedliche Zuführungsdauer für das Kondensat auf die Rückenfläche der in den unterschiedlichen Formhälften vorgesehenen Formwandteile einzurichten. Beispielsweise kann für die als Haubenteil vorgesehene Werkzeughälfte 11 eine Kondensatzuführung von 3 sec. und für die als Kernteil vorgesehene Werkzeughälfte 21 eine Kondensatzuführungsdauer von 1 sec. vorgesehen werden. Unterschiedliche Zuführungsdauer und zeitlich versetzte Zuführung des Kondensats lassen sich durch entsprechende Zeitsteuerung der beiden Betätigungsvorrichtungen 84 für jeden Anwendungsfall optimal einstellen.

Wie Figur 8 zeigt, sind die vom Ventilblock zum Misch- und Injektorkopf 68 führende Kondensat-Zuführungsleitung 66 und Wasserdampf-Zuführungsleitung 67 als flexible Koaxialleitung 86 mit äußerer Wärmedämmungsschicht 87 ausgebildet. In der Koaxialleitung ist mittig die Kondensatleitung 66 angeordnet und von der Wasserdampfleitung 67 umgeben. Auf diese Weise wird Wärmeverlust im Kondensat zwischen dem Ventilblock 65 und dem Misch- und Injektorkopf 68 verhindert. Der Misch- und Injektorkopf 68 ist im dargestellten Beispiel steckerartig ausgebildet und auf einen an der Rückwand 88 der Dampfkammer 13 angebrachten Einführungsstutzen 89 aufgesetzt. Von dem Stutzen 89 führt ein Verbindungsstück 90 in das Innere der Dampfkammer 13. Auf dises Verbindungsstück 90 sind nach oben und seitlich gerichtete Rohre, vorzugsweise Kupferrohre 91, gesetzt, die mit gegen die Rückenfläche 42 bzw. die auf ihr angebrachte Schicht 44 gerichtete Schlitze 92 als Sprüh- oder Spritzdüsen aufweisen.

Der steckerartig ausgebildete Misch- und Injektorkopf 68 enthält als Abschluß der Kondensat-Zuführungsleitung 66 einen mit radial gerichteten Auslaßkanälen 93 versehenen Verteilerkopf 94, der in seinem Inneren ein federbelastetes Rückschlagventil 95 enthält. Bei geöffnetem Rückschlagventil 95 wird das Kondensat durch die Auslaßkanäle 93 in den ringförmigen Strömungsraum des Dampfes gedrückt. Das Gemisch von Kondensat und Wasserdampf tritt dann durch den Stutzen 89 in die Rohre 91 und von dort durch die Schlitze 92 in feiner Form auf die Rückenfläche 42 des Formwandteils 12 bzw. auf die dort angebrachte Schicht 44. Sobald der Druck im Kondensat aufhört, schließt sich das Rückschlagventil 95, so daß kein Dampf rückwärts in die Kondensatleitung gedrückt werden kann, sondern die Kondensatleitung 66 stets in mit Kondensat gefülltem Zustand gehalten wird.

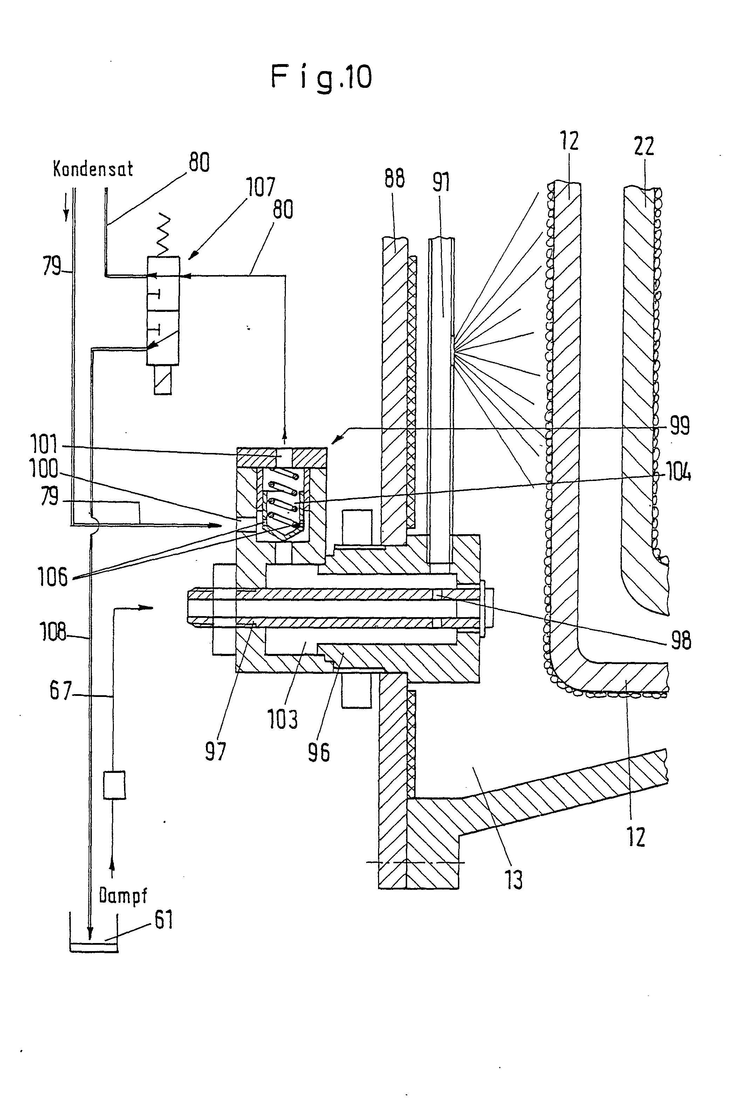

In Figur 10 ist eine abgewandelte Ausführungsform wiedergegeben, in der ein Ventil- und Injektorkopf 96 in die Rückwand 88 der Dampfkammer 13 eingesetzt ist. Ein Dampfeinführungsrohr 97 erstreckt sich axial durch den Ventil- und Injektorkopf 96 und weist den angeschlossenen Spritz- oder Sprührohren 91 gegenübergestellte Injektordüsen 98 auf. Das Dampfeinführungsrohr 97 ist an eine Wasserdampf-Zuführungsleitung 67 angeschlossen, in welcher ein zeitgesteuertes Dampfventil 52 angeordnet ist. Auf den Ventil- und Injektorkopf 96 ist ein Kondensateinlaßventil 99 aufgesetzt, das einen seitlichen Anschluß 100 für die Kondensat-Vorlaufleitung 79 und einen axialen Anschluß 101 für die Kondensat-Rücklaufleitung 80 aufweist. Über eine innere axiale Bohrung 102 steht das Kondensat-Einlaßventil 99 mit dem das Dampfeinführungsrohr 97 umgebenden Ringraum 103 des Ventil- und Injektorkopfes 96 in Verbindung. Das Kondensat-Einlaßventil 99 enhält einen hülsenförmigen, an der Vorderseite kegelförmigen Ventilkörper 104, der mittels Feder 105 auf die Bohrung 102 gedrückt ist. Der Ventilkörper weist in seinem Umfang Drosselbohrungen 106 auf, die bei geschlossenem Ventil vom seitlichen Anschluß 100 durch das Innere des Ventilkörpers 104 zum axialen Anschluß 101 führen. In die Kondensat-Rücklaufleitung 80 ist ein Steuerventil 107 eingesetzt, das in Normalstellung mit der Fortsetzung der Kondensatrücklaufleitung 80 verbunden ist, also einen Kondensatkreislauf von der Kondensatvorlaufleitung 79 über das Einlaßventil 99 zum Kondensatrücklauf 80 schließt. Zum Aufspritzen oder Aufsprühen von Kondensat-Wasserdampf-Gemisch auf die Rückenfläche 42 des Formwandteiles 12 bzw. eine auf dieser Rückenfläche 42 aufgebrachte Schicht 44 wird das Steuerventil 107 in eine Stellung gebracht, in der die Rücklaufleitung mit einer zum Kondensat-Sammelbehälter 61 (vergl. Fig. 7) führenden, druckentlasteten Kondensatableitung 108 verbunden wird. Der dadurch am seitlichen Anschluß 100 im Kondensat entstehende Überdruck bezüglich des Kondensats am Anschluß 101 hat zur Folge, daß der Ventilkörper 104 entgegen der Kraft der Feder 105 von der Bohrung 102 abgehoben wird. Es tritt dadurch das Kondensat unter dem in ihm herrschenden Druck in den Ringraum 103 über. Gleichzeitig ist auch das Dampfventil 52 zu öffnen, so daß das Gemisch von Kondensat und Wasserdampf in die geschlitzen Rohre 91 übergeführt und aus den Schlitzdüsen verspritzt oder versprüht wird. Bei Umstellen des Steuerventils 107 in die in Figur 10 gezeigte Normalstellung wird am axialen Anschluß 101 wieder der im Kondensatkreislauf herrschende Druck aufgebaut, der Ventilkörper 104 schließt sich wieder unter der Wirkung der Feder 105. Es ist dann auch wieder das Dampfventil 52 zu schließen. Wie im Beispiel der Figuren 7 bis 9 kann auch in der Ausführung nach Figur 10 die Wasserdampfzufuhr zeitlich vor dem Einlassen des Kondensats beginnen und erst zeitlich nach dem Schließen des Kondensat-Einlaßventils 99 abgestellt werden, so daß vor und nach dem Versprühen des Kondensats die Sprüh- oder Spritzvorrichtung mit Wasserdampf durchspült wird.

**Bezugszeichenliste**

10 Formwerkzeug
11 Werkzeughälfte
12 Formwand
13 Dampfkammer
14 Öffnungen
15 Anschluß
16 Dampfeinlaßventil
17 Vakuumventil
18 Kondensat-Auffangsumpf
19 Kondensat-Fördervorrichtung
21 Werkzeughälfte

22 Formwand
23 Dampfkammer
24 Öffnungen
25 Anschluß
26 Dampfeinlaßventil
27 Vakuumventil
28 Kondensat-Auffangsumpf
29 Kondensat-Fördervorrichtung
30 Formhohlraum
31 Injektor
32 Dampferzeuger
33 Vakuumpumpe
40 Sammel- und Aufbereitungseinrichtung
41 Sprühvorrichtung/Spritzvorrichtung
42 Rückenfläche
43 Rückenfläche
44 Schicht
45 Flächenvergrößerungselement
46 Aufnahmeraum
47 Durchlässe
50 Kondensatmischkopf
51 Kondensatleitung
52 Dampfventil
53 Dampfventil
54 Wärmetauscher
55 Temperaturgesteuertes Dampfventil
56 Kondensatabscheider
57 Kondensat-Rückleitung
58 Dampfrückleitung
59 Strahldüse
60 Kondensat-Absperrventil
61 Kondensat-Sammelgefäß
62 Absperrventil
63 Dampfzweigleitung
64 Kondensatableitung
65 Ventilblock
66 Kondensat-Zuführungsleitung
67 Wasserdampf-Zuführungsleitung
68 Misch- und Injektorkopf
69 Förderpumpe
70 Kondensatfilter
71 Rückschlagventil
72 Kondensaterhitzer
73 Niveausonde
74 Luftpolster
75 Druckluftquelle
76 Druckluftventil
77 Sicherheitsventil
78 Wärmetauscher
78a Temperatursonde
79 Kondensat-Vorlaufleitung
80 Kondensat-Rücklaufleitung
81 Umwälzpumpe
82 Kondensatventil
82a Ventilbohrung
82b Ventilstift
82c axialer Abstand
82d Auslaßkanal

82e Kondensateinlaß
82f zusätzlicher Kondensatauslaß
82g Drosselbohrung
83 Dampfventil
83a Ventilteller
83b Ventilkammer
83c Dampfeinlaß
83d Ventilkammer
83e Ventildeckel
83f Dampfkanäle
83g Verbindungsbohrung
84 Betätigungsvorrichtung
84a Doppelpfeil
84b Betätigungsstange
85 Anschlußstutzen
85a Innenkanal
85b Ringkanal
86 Koaxialleitung
87 Wärmedämmungsschicht
88 Rückwand
89 Stutzen
90 Verbindungsstück
91 Kupferrohr
92 Schlitz (Sprüh- oder Spritzdüse)
93 Auslaßkanäle
94 Verteilerkpf
95 Rückschlagventil
96 Ventil- und Injektorkopf
97 Dampfeinführungsrohr
98 Injektordüse
99 Kondensat-Einlaßventil
100 seitlicher Anschluß
101 axialer Anschluß
102 Bohrung
103 Ringraum
104 Ventilkörper
105 Feder
106 Drosselbohrung
107 Steuerventil
108 Kondensat-Ableitung

## Ansprüche

1.) Verfahren zum Herstellen von Formlingen aus expandierbaren Kunststoffpartikeln, insbesondere vorgeschäumten Polystyrolpartikeln, bei dem die Kunststoffpartikel im Formhohlraum eines zwei- oder mehrteiligen Formwerkzeugs unter der Einwirkung von Wärme aufgebläht und gegen die eigentlichen Formwandteile geformt werden, die dazu mittels in an ihrer Außenseite angeordnete Dampfkammern eingeführten heißen Wasserdampfes beheizt werden, wobei die geblähten Kunststoffpartikel durch in den Formhohlraum eingeführten Wasserdampf miteinander verschweißt werden und die so gebildeten Formlinge im Formwerkzeug durch mittels Flüssigkeitsaufgabe und Evakuieren der Dampfkammern erfolgendes Kühlen der eigentlichen Formwandteile stabilisiert und anschließend entformt werden,

**dadurch gekennzeichnet, daß**

das Kühlen der eigentlichen Formwandteile durch Verdampfen von aus Wasserdampf gebildetem Kondensat unter Evakuieren der Dampfkammern vorgenommen wird und daß zu verdampfendes Kondensat hierzu vor zumindest bei Beginn des Kühlens, auf die der jeweiligen Dampfkammer zugewandten Rückenfläche der eigentlichen Formwandteile innerhalb der Dampfkammer mit einer Temperatur aufgebracht wird, die gleich oder nur wenige Kelvin, maximal 10 K, unterhalb der Siedetemperatur des Kondensats ist, und zwar derjenigen Siedetemperatur, wie sie dem im Zeitpunkt des Aufbringens des Kondensats auf die Formwand-Rückenfläche in der Dampfkammer herrschenden Druck entpricht.

2.) Verfahren nach Anspruch 1, dadurch gekennzeichnet, daß die Temperatur, mit der das Kondensat auf die Formwand-Rückenfläche aufgebracht wird, 1 K bis 2 K unterhalb der durch den Druck in der Dampfkammer bestimmten Siedetemperatur des Kondensats liegt.

3.) Verfahren nach Anspruch 1 oder 2, dadurch gekennzeichnet, daß das im Verfahren anfallende Wasserdampf-Kondensat aufgefangen und als zumindest ein Teil der zum Kühlen der Formwandteile zu benutzenden Kondensatmenge eingesetzt wird.

4.) Verfahren nach einem der Ansprüche 1 bis 3, dadurch gekennzeichnet, daß zusätzlich zu dem sich bei Druckentspannung in der Dampfkammer an der Rückenfläche der Formwandteile niedergeschlagenen und dort aufgefangenen Kondensat noch in seiner Temperatur auf oder wenige Kelvin unter Siedetemperatur eingestelltes Kondensat auf die Rückenfläche der Formwandteile gespritzt oder gesprüht wird.

5.) Verfahren nach einem der Ansprüche 1 bis 4, dadurch gekennzeichnet, daß auch bei fortschreitendem Kühlvorgang noch Kondensat auf die der Dampfkammer zugewandten Rückenfläche der Formwandteile aufgebrach und dieses Kondensat stets mit solcher Temperatur auf die Rückenfläche der Formwandteile gesprüht und/oder gespritzt wird, die oberhalb derjenigen Temperatur liegt, wie sie beim Entformen am Formwerkzeug herrscht.

6.) Verfahren nach einem der Ansprüche 1 bis 5, dadurch gekennzeichnet, daß zumindest ein Teil der für das Verdampfen zur Kühlung der Formwandteile eingesetzten Kondensatmenge durch Auffangen und Zurückhalten des sich während der dem Kühlen vorangehenden Verfahrensschritte desselben Verfahrenszyklus niederschlagenden Kondensats an der der Dampfkammer zugewandten Rückenfläche des jeweiligen Formwandteiles selbst gewonnen und direkt von dort zur Kühlung wieder verdampft wird.

7.) Verfahren nach Anspruch 6, dadurch gekennzeichnet, daß nur das sich an der Formwand-Rückenfläche niederschlagende Kondensat zum Kühlen benutzt wird.

8.) Verfahren nach einem der Ansprüche 1 bis 7, dadurch gekennzeichnet, daß das in den Dampfkammern anfallende, von der Rückenfläche des jeweiligen Formwandteiles freie Kondensat aufgefangen und zumindest zum Teil als zum Verdampfen vorgesehene Kondensatmenge oder zum Ergänzen der zum Verdampfen vorgesehenen Kondensatmenge auf die der Dampfkammer zugewandten Rückenfläche des jeweiligen Formwandteiles gesprüht und/oder gespritzt wird.

9.) Verfahren nach einem der Ansprüche 1 bis 8, dadurch gekennzeichnet, daß das in den Dampfkammern anfallende, von der Rückenfläche des jeweiligen Formwandteiles freie Kondensat aus der jeweiligen Dampfkammer abgezogen, gesammelt und zum Einleiten des Kühlens der eigentlichen Formwandteile zunächst auf eine wenige Kelvin unterhalb derjenigen Siedetemperatur liegende Temperatur eingestellt wird, wie sie dem beim Aufbringen des Kondensats auf die Rückenfläche des Formwandteiles in der jeweiligen Dampfkammer herrschenden Druck entspricht, und daß das so in seiner Temperatur eingestellte Kondensat mittels gasförmigem Mediums, vorzugsweise Wasserdampf, innerhalb der Dampfkammer auf die Rückseite der zu kühlenden Formwandteile gesprüht und/oder gespritzt wird.

10.) Verfahren nach Anspruch 9, dadurch gekennzeichnet, daß bei Betrieb einer Mehrzahl von Schäumformmaschinen das in allen Schäumformmaschinen anfallende, freie Kondensat zentral gesammelt, zentral aufbereitet und je nach Kühlungsbedarf wieder an die einzelnen Schäumformmaschinen verteilt wird.

11.) Verfahren nach Anspruch 9 oder 10, dadurch gekennzeichnet, daß das gesammelte Kondensat mittels aus Wasserdampf erzeugtem Frischkondensat ergänzt und/oder aufbereitet wird.

12.) Verfahren nach einem der Ansprüche 1 bis 11, dadurch gekennzeichnet, daß die Kühlmittel-Zuführungsleitungen zu den Dampfkammern ständig mit Kondensat gefüllt gehalten werden, das außer den Kühlzeiten durch Umlauf durch einen Wärmetauscher ständig auf einer nur wenige Kelvin unterhalb der Siedetemperatur liegenden Temperatur und auf für das Versprühen oder Verspritzen geeignetem Druck gehalten wird.

13.) Verfahren nach einem der Ansprüche 1 bis 12, dadurch gekennzeichnet, daß bei Herstellung von Formlingen aus expandiertem Polystyrol die eigentlichen Formwandteile auf eine Temperatur zwischen etwa 70°C und 80°C abgekühlt werden und bei Beginn des Kühlvorganges das Kondensat mit Temperatur bei 98°C bis 100°C auf die der Dampfkammer zugewandten Rückenfläche der Formwandteile gesprüht und/oder gespritzt wird, während der Absolutdruck in der Dampfkammer im Bereich von 1 bar beträgt.

14.) Verfahren nach einem der Ansprüche 1 bis 13, dadurch gekennzeichnet, daß das zum Kühlen auf die Rückenfläche der Formwandteile zu sprühende oder zu spritzende Kondensat mit einem Druck bei 2,5 bis 3 bar in die Dampfkammer gesprüht oder gespritzt und dabei in der Dampfkammer während des Kühlens - ausgehend von Atmosphärendruck - durch Evakuieren Druckminderung auf etwa 200 mbar bis 300 mbar Absolutdruck erzeugt wird.

15.) Vorrichtung zum Herstellen von Formlingen aus expandierbaren Kunststoffpartikeln, insbesondere vorgeschäumten Polystyrolpartikeln, im Verfahren nach einem der Ansprüche 1 bis 14, mit einem zwei-oder mehrteiligen Formwerkzeug, dessen Formhohlraum durch eigentliche Formwandteile begrenzt ist, an deren Rückseite Dampfkammern zum Beheizen der Formwand mittels Wasserdampf und an denen Einrichtungen zum Zuführen von Dampf in den Formhohlraum vorgesehen sind, wobei in den Dampfkammern Einrichtungen zum gesteuerten Einsprühen oder Einspritzen von Kühlflüssigkeit angebracht sind,
**dadurch gekennzeichnet, daß**
Formwandteile (12, 22) an ihrer der jeweiligen Dampfkammer (13, 23) zugewandten Rückenfläche mit zum Halten und Abdampfen von Kondensat ausgebildeter Oberfläche (42, 43) ausgebildet sind und die Einrichtungen zum Einsprühen oder Einspritzen von Kühlflüssigkeit auf die Rückenfläche der Formwandteile (12, 22) gerichtete Sprühvorrichtungen (41) oder Spritzvorrichtungen aufweisen, die über eine für die Erzeugung ausreichenden Sprüh- oder Spritzdruckes ausgebildete Kondensat-Fördervorrichtung (19, 29) an Sammel- und Aufbereitungseinrichtungen (40) für das Kondensat angeschlossen sind, während die Dampfkammern (13, 23) mit Einrichtungen zum Abführen des in ihnen anfallenden, von der Rückenfläche der Formwandteile (12, 22) freien Kondensats für dessen Einsatz als Kühlmittel an diese Sammel- und Aufbereitungseinrichtungen (40) angeschlossen sind.

16.) Vorrichtung nach Anspruch 15, dadurch gekennzeichnet, daß mindestens eine der Dampfkammern (13, 23) an ihrem unteren Teil einen Kondensat-Auffangsumpf (18, 28) als Sammeleinrichtung aufweist und im Inneren mindestens einer der Dampfkammern (13, 23) eine im wesentlichen auf die Rückenfläche des jeweiligen Formwandteiles (12, 22) gerichtete Sprühvorrichtung (41) und/oder Spritzvorrichtung vorgesehen ist, wobei diese Sprühvorrichtung (41) oder Spritzvorrichtung über eine für die Erzeugung ausreichenden Sprüh- oder Spritzdruckes ausgebildete Kondensat-Fördervorrichtung (19, 29) an den Kondensat-Auffangsumpf (18, 28) angeschlossen ist und Einrichtungen zum Aufbereiten des Kondensats, insbesondere dessen Temperatureinstellung, in den Kondensat- Auffangsumpf (18, 20) und/oder in die Kondensat- Fördervorrichtung (19, 27) einbezogen sind.

17.) Vorrichtung nach Anspruch 15 oder 16, dadurch gekennzeichnet, daß zur Bildung der Kondensat-Fördervorrichtung (19, 29) ein im unteren Teil mindestens einer Dampfkammer (13, 23) gebildeter Kondensat-Auffangsumpf (18, 28) eine durch Ventil (60) von der Dampfkammer (13, 23) abtrennbare Kammer (61) aufweist, an die eine zur Sprühvorrichtung (41) oder Spritzvorrichtung führende Kondensatleitung (55) angeschlossen und in der das Kondensat mittels Wasserdampf auf der gewünschten Temperatur gehalten und mit für das Fördern und Versprühen oder Verspritzen ausreichendem Druck beaufschlagt wird.

18.) Vorrichtung nach Anspruch 15, dadurch gekennzeichnet, daß ein über Kondensat-Abführleitungen (64) an die Dampfkammern (13, 23) einer oder mehrerer Formmaschinen angeschlossener Kondensat-Sammelbehälter (61) vorgesehen ist, von welchem das Kondensat mittels der Kondensat-Fördervorrichtung (19) über einen Kondensaterhitzer (72) in zu den Sprühvorrichtungen (41) oder Spritzvorrichtungen der Dampfkammern (13, 23) führenden Kondensatzuleitungen (79, 66) übergeführt wird.

19.) Vorrichtung nach Anspruch 18, dadurch gekennzeichnet, daß der Kondensaterhitzer (72) einen mit Wasserdampf betriebenen Wärmetauscher (78) enthält.

20.) Vorrichtung nach Anspruch 19, dadurch gekennzeichnet, daß der Wärmetauscher (78) ei- nen mit Wasserdampf betriebenen Wärmespender- teil (Rohrschlange) aufweist, an den eine Auffangvorrichtung (56) für das im Wärmespenderteil anfallende Kondensat angeschlossen ist, wobei diese Kondensat-Auffangvorrichtung (56) an den Kondensat-Sammelbehälter (61) angeschlossen ist.

21.) Vorrichtung nach einem der Ansprüche 18 bis 20, dadurch gekennzeichnet, daß die Kondensat-Zuleitungen (79, 66) zusammen mit Kondensat-Rückleitungen (80) als über den Kondensaterwärmer führendes, eine Förderpumpe (81) enthaltendes Kreislaufsystem ausgebildet sind, das mittels den Sprühvorrichtungen (41) oder Spritzvorrichtungen zugeordneter Steuerventile (65, 82, 83; 99, 107) gesteuert entweder auf Kreislaufbetrieb oder auf Kondensatzuführung zu den Sprühvorrichtungen (41) oder Spritzvorrichtungen umschaltbar ist.

22.) Vorrichtung nach Anspruch 21, dadurch gekennzeichnet, daß die Steuerventile (82, 83) jeweils durch ein zusammenwirkendes Ventilepaar gebildet sind, nämlich ein die Kondensatzuführungsleitung (79) zu den Spritz-oder Sprühdüsen (41) zeitweilig an den Kondensatkreislauf (79, 80) anschließendes Kondensatventil (82) und ein die Wasserdampfzuführung zu den Spritz- oder Sprühdüsen (41) zeitweilig öffnendes Dampfventil (83).

23.) Vorrichtung nach Anspruch 22, dadurch gekennzeichnet, daß das Ventilepaar (82, 83) derart gesteuert ist, daß das Dampfventil (83) kurzzeitig vor dem Kondensatventil (81) in Öffnungsstellung zum Anschließen der Kondensatzuführungsleitung (66) an den Kondensatkreislauf (79, 80) gebracht wird.

24.) Vorrichtung nach Anspruch 22 oder 23, dadurch gekennzeichnet, daß die vom Ventilepaar (82, 83) abgeführte Kondensatzuführungsleitung (66) und Dampfleitung (67) zu einer Wärmetauschereinrichtung, beispielsweise in Art einer Koaxialleitung (86), vereint sind, in der die Dampfleitung (67) zugleich ein Heizelement für die Kondensatleitung (66) bildet.

25.) Vorrichtung nach einem der Ansprüche 15 bis 24, dadurch gekennzeichnet, daß die Kondensat-Fördervorrichtung (19, 29) zumindest einen Flüssigkeitsinjektor (50) enthält.

26.) Vorrichtung nach Anspruch 25, dadurch gekennzeichnet, daß der Flüssigkeitsinjektor (50) eine mit Wasserdampf beschickte Betätigungsdüse (59) enthält.

27.) Vorrichtung nach einem der Ansprüche 22 bis 26, dadurch gekennzeichnet, daß in die Kondensatleitung zwischen dem Kondensatventil und den Sprüh- oder Spritzdüsen (41) an jeder Dampfkammer (13, 23) mindestens ein Flüssigkeitsinjektor (50, 68, 96) vorgesehen ist, an den sich in die Dampfkammer (13, 23) erstreckende, mit Sprüh- oder Spritzdüsen (92) besetzte Kondensat-Verteilerleitungen (91) anschließen.

28.) Vorrichtung nach einem der Ansprüche 15 bis 27, dadurch gekennzeichnet, daß die Kondensat-Fördervorrichtung (19, 29) einen Druckerzeuger in Art einer Zylinder-Kolben-Anordnung (56) enthält.

29.) Vorrichtung nach einem der Ansprüche 15 bis 27, dadurch gekennzeichnet, daß die Kondensat-Fördervorrichtung (19, 29) einen Druckerzeuger in Art einer rotierenden Umwälzpumpe (62, 81) enthält.

30.) Vorrichtung nach einem der Ansprüche 15 bis 29, dadurch gekennzeichnet, daß die Sprühvorrichtung (41) oder Spritzvorrichtung sich im Inneren entlang der und in Abstand von der Rückenfläche (42, 43) der Formwandteile (12, 22) erstreckende Kühlrohre (91) aufweist, die über ihre Länge in Abständen angeordnete, gegen die Rückfläche der Formwandteile (12, 22) gerichtete Sprüh- oder Spritzdüsen (92) aufweisen..

31.) Vorrichtung nach Anspruch 30, dadurch gekennzeichnet, daß die Sprüh- oder Spritzdüsen (92) durch in der Wandung der Kühlrohre (91) angebrachte Schlitze gebildet sind.

32.) Vorrichtung nach einem der Ansprüche 15 bis 31, dadurch gekennzeichnet, daß mindestens einer der Formwandteile (12, 22) an seiner der Dampfkammer (13, 23) zugewandten Rückenfläche (42, 43) mindestens eine Lage von wärmeleitenden, im wesentlichen kugelförmigen Flächenvergrößerungselementen (45) in wärmeleitender Verbindung mit der eigentlichen Formwand und in flächenmäßig dichter Anordnung aufweist.

33.) Vorrichtung nach Anspruch 32, dadurch gekennzeichnet, daß die Flächenvergrößerungselemente (45) sämtlich im wesentlichen gleich große Abmessungen aufweisen.

34.) Vorrichtung nach Anspruch 32 oder 33, dadurch gekennzeichnet, daß die Formwandteile (12, 22) auf ihrer der Dampfkammer (13, 23) zugewandten Rückenfläche (42, 43) eine Lage (44) von Flächenvergrößerungselementen (45) aufweisen, die im wesentlichen die Form von Kugeln mit Durchmessern von 2 mm bis 3 mm aufweisen.

35.) Vorrichtung nach einem der Ansprüche 32 bis 34, dadurch gekennzeichnet, daß die Flächenvergrößerungselemente (45) einstückig dem eigentlichen Formwandteil angeformt, vorzugsweise angegossen sind.

Fig.1

Wasserdampf 2÷3bar,120÷133°C

Fig.2

Fig.3

Fig.4

Fig.5

Fig.6

Wasserdampf
2÷3bar,120÷133°C

# Fig.7

Wasserdampf 2÷3bar
120÷133° C

Druckluft
2÷4bar

95÷100°C

Fig.8
( X )

Dampf

Kondensat

EP 0 336 225 A2

# Fig.9

(A-B)

(Y)

für 11    84

für 21    84

84b    84a
83e    83d    83a    83b

83    83f    83g
83c    83d    84b    84a

83f    86  85
85a  85

83g    83a    83b

82    82a    82b
82a    82b    82g  82f  82g  82e    65    67  66  85b    82e

82c    82d

EP 0 336 225 A2

# F i g .10